(19) **Europäisches Patentamt**
**European Patent Office**
**Office européen des brevets**

(11) **EP 4 009 219 A1**

(12) **EUROPEAN PATENT APPLICATION**

(43) Date of publication:
**08.06.2022 Bulletin 2022/23**

(21) Application number: **21190092.3**

(22) Date of filing: **06.08.2021**

(51) International Patent Classification (IPC):
**G06F 40/237** (2020.01)     **G06F 40/216** (2020.01)
**G06F 40/289** (2020.01)     **G06F 40/30** (2020.01)
**G06N 3/02** (2006.01)

(52) Cooperative Patent Classification (CPC):
**G06F 40/237; G06F 40/216; G06F 40/289;**
**G06F 40/30; G06N 3/02**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **02.12.2020 US 202017109220**

(71) Applicant: **FUJITSU LIMITED**
**Kanagawa 211-8588 (JP)**

(72) Inventors:
• **Wang, Jun**
**Sunnyvale, 94085 (JP)**
• **Uchino, Kanji**
**Sunnyvale, 94085 (JP)**

(74) Representative: **Hoffmann Eitle**
**Patent- und Rechtsanwälte PartmbB**
**Arabellastraße 30**
**81925 München (DE)**

(54) **ANALYSIS OF NATURAL LANGUAGE TEXT IN DOCUMENT USING HIERARCHICAL GRAPH**

(57)     A method includes constructing a hierarchal graph associated with a document. The hierarchal graph includes a document node, a set of paragraph nodes, a set of sentence nodes, and a set of token nodes. The method further includes determining, based on a language attention model, a set of weights associated with a set of edges between a first node and each connected second set of nodes. The method further includes applying a GNN model on the hierarchal graph based on a set of first features associated with each token node, and the set of weights. The method further includes updating a set of features associated with each node based on the application, and generating a document vector for an NLP task, based on the updated set of features. The method further includes displaying an output of the NLP task for the document, based on the document vector.

FIG. 5

EP 4 009 219 A1

**Description**

FIELD

The embodiments discussed in the present disclosure are related to analysis of a natural language text in a document.

BACKGROUND

Many new technologies are being developed in the field of natural language processing (NLP) for analysis of documents. Most of such technologies consider sentence level information in a document to ascertain a context or sentiment associated with the individual sentences in the document. However, in certain cases, the context or sentiment associated with a sentence may be dependent on other sentences in the same paragraph or other paragraphs in the document. In some cases, multiple sentences may contain opposing or contradictory opinions in a paragraph. Further, in other cases, a single sentence may not in itself have a strong sentiment, however, a sentiment of the paragraph as a whole may be an indicative of the sentiment associated with the sentence. Hence, there is a need for a technique that may give accurate natural language processing results in such scenarios and also may have a reasonable computational cost.

The subject matter claimed in the present disclosure is not limited to embodiments that solve any disadvantages or that operate only in environments such as those described above. Rather, this background is only provided to illustrate one example technology area where some embodiments described in the present disclosure may be practiced.

SUMMARY

According to an aspect of an embodiment, a method may include a set of operations which may include constructing a hierarchal graph associated with a document. The hierarchal graph may include a plurality of nodes including a document node, a set of paragraph nodes connected to the document node, a set of sentence nodes each connected to a corresponding one of the set of paragraph nodes, and a set of token nodes each connected to a corresponding one of the set of sentence nodes. The operations may further include determining, based on a language attention model, a set of weights associated with a set of edges between a first node and each of a second set of nodes connected to the first node in the constructed hierarchal graph. The language attention model may correspond to a model to assign a contextual significance to each of a plurality of words in a sentence of the document. The operations may further include applying a graph neural network (GNN) model on the constructed hierarchal graph based on at least one of: a set of first features associated with each of the set of token nodes, and the determined set of weights. The operations may further include updating a set of features associated with each of the plurality of nodes based on the application of the GNN model on the constructed hierarchal graph. The operations may further include generating a document vector for a natural language processing (NLP) task, based on the updated set of features associated with each of the plurality of nodes. The NLP task may correspond to a task associated with an analysis of a natural language text in the document based on a neural network model. The operations may further include displaying an output of the NLP task for the document, based on the generated document vector.

The objects and advantages of the embodiments will be realized and achieved at least by the elements, features, and combinations particularly pointed out in the claims.

Both the foregoing general description and the following detailed description are given as examples and are explanatory and are not restrictive of the invention, as claimed.

BRIEF DESCRIPTION OF THE DRAWINGS

Example embodiments will be described and explained with additional specificity and detail through the use of the accompanying drawings in which:

FIG. 1 is a diagram representing an example environment related to analysis of a natural language text in a document;
FIG. 2 is a block diagram that illustrates an exemplary electronic device for analysis of a natural language text in a document;
FIG. 3 is a diagram that illustrates an example hierarchal graph associated with a document;
FIG. 4 is a diagram that illustrates an example scenario of addition of one or more sets of additional edges in the exemplary hierarchal graph of FIG. 3;
FIG. 5 is a diagram that illustrates a flowchart of an example method for analysis of a natural language text in a document;

FIG. 6 is a diagram that illustrates a flowchart of an example method for construction of a hierarchal graph associated with a document;

FIG. 7 is a diagram that illustrates a flowchart of an example method for determination of a parsing tree associated with a set of tokens associated with a sentence;

FIG. 8A is a diagram that illustrates an example scenario of a dependency parse tree for an exemplary sentence in a document;

FIG. 8B is a diagram that illustrates an example scenario of a constituent parse tree for an exemplary sentence in a document;

FIG. 9 is a diagram that illustrates a flowchart of an example method for addition of one or more sets of additional edges to a hierarchal graph;

FIG. 10 is a diagram that illustrates a flowchart of an example method for an initialization of a set of features associated with a plurality of nodes of a hierarchal graph;

FIG. 11 is a diagram that illustrate a flowchart of an example method for determination of a token embedding of each of a set of token nodes in a hierarchal graph;

FIG. 12 is a diagram that illustrates an example scenario of determination of a token embedding associated with each of a set of token nodes of a hierarchal graph;

FIG. 13 is a diagram that illustrates a flowchart of an example method for application of a Graph Neural Network (GNN) on a hierarchal graph associated with a document;

FIG. 14 is a diagram that illustrates a flowchart of an example method for application of a document vector on a neural network model;

FIG. 15 is a diagram that illustrates an example scenario of a display of an output of an NLP task for a document; and

FIG. 16A and 16B are diagrams that illustrate example scenarios of a display of an output of an NLP task for a document,

all according to at least one embodiment described in the present disclosure.

DESCRIPTION OF EMBODIMENTS

Some embodiments described in the present disclosure relate to methods and systems for analysis of a natural language text in a document. In the present disclosure, a hierarchal graph associated with the document may be constructed. The constructed hierarchal graph may also be heterogenous and may include nodes such as, a document node, a set of paragraph nodes each connected to the document node, a set of sentence nodes each connected to a corresponding paragraph node, and a set of token nodes each connected to a corresponding sentence node. Further, based on a language attention model, a set of weights may be determined. The set of weights may be associated with a set of edges between a first node and each of a second set of nodes connected to the first node in the constructed hierarchal graph. The language attention model may correspond to a model to assign a contextual significance to each of a plurality of words in a sentence of the document. A graph neural network (GNN) model may be applied on the constructed hierarchal graph based on at least one of: a set of first features associated with each of the set of token nodes, and the determined set of weights. Based on the application of the GNN model on the constructed hierarchal graph, a set of features associated with each of the plurality of nodes may be updated. Further, a document vector may be generated for a natural language processing (NLP) task, based on the updated set of features associated with each of the plurality of nodes. The NLP task may correspond to a task associated with an analysis of a natural language text in the document based on a neural network model. Finally, an output of the NLP task for the document may be displayed, based on the generated document vector.

According to one or more embodiments of the present disclosure, the technological field of natural language processing may be improved by configuring a computing system in a manner that the computing system may be able to effectively analyze a natural language text in a document. The computing system may capture a global structure of the document for construction of the hierarchal graph, as compared to other conventional systems which may use only information associated individual sentences in the document. The disclosed system may be advantageous, as in certain scenarios, context and sentiment associated with a sentence may not be accurately ascertained based on just the information associated with the sentence. For example, the context and sentiment associated with the sentence may depend on the context and sentiment of other sentences in a paragraph or other sentences in the document as a whole.

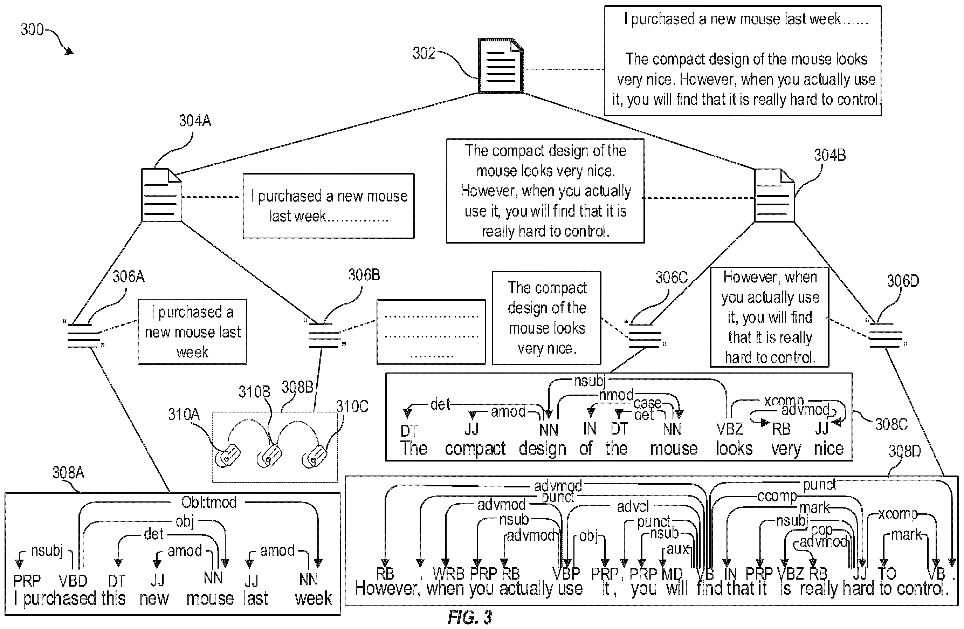

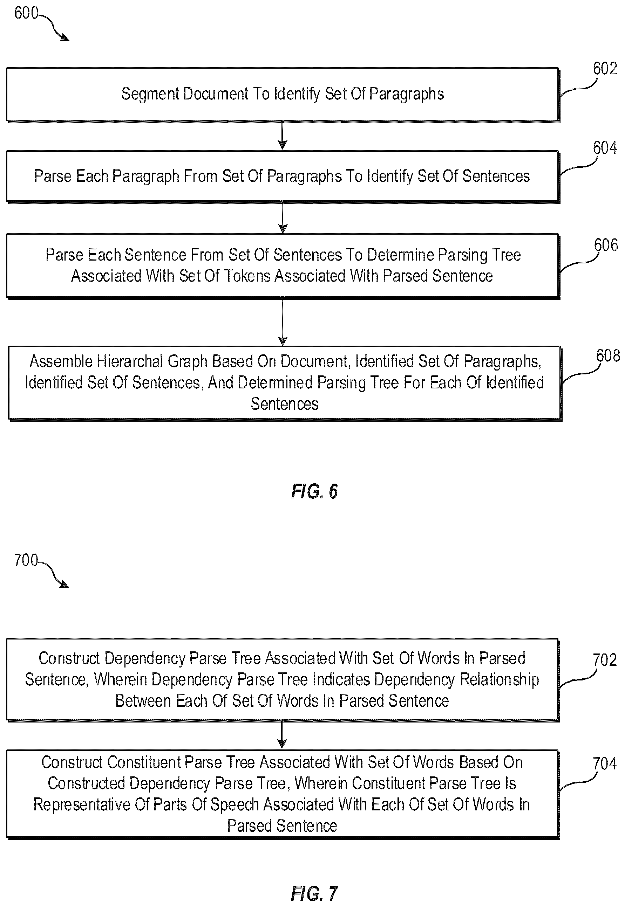

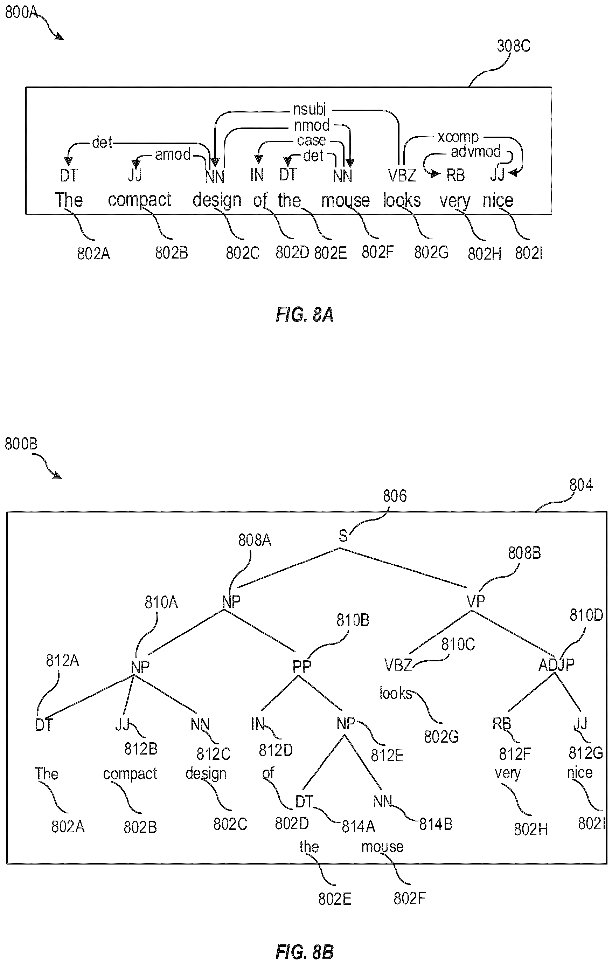

The system may be configured to construct a hierarchal graph associated with a document. The hierarchal graph may be heterogenous and may include a plurality of nodes of different types. The plurality of nodes may include a document node, a set of paragraph nodes each connected to the document node, a set of sentence nodes each connected to a corresponding one of the set of paragraph nodes, and a set of token nodes each connected to a corresponding one of the set of sentence nodes. For example, the document node may be a root node (i.e. first level) at the highest level of the hierarchal graph. The root node may represent the document as a whole. A second level of the hierarchal graph may include the set of paragraph nodes connected to the root node. Each of the set of paragraph nodes may represent a paragraph in the document. Further, a third level of the hierarchal graph may include the set of sentence nodes each connected to a corresponding paragraph node. Each of the set of sentence nodes may represent a sentence in a certain paragraph in the document. Further, a fourth level of the hierarchal graph may include a set of leaf nodes including the set of token nodes each connected to a corresponding sentence node. Each of the set of token node may represent a token associated with a word in a sentence in a certain paragraph in the document. One or more token nodes that correspond to a same sentence may correspond a parsing tree associated with the sentence. The determination of the parsing tree may include construction of a dependency parse tree and construction of a constituent parse tree. An example of the constructed hierarchal graph is described further, for example, in FIG. 3. The construction of the hierarchal graph is described further, for example, in FIG. 6. Examples of the dependency parse tree and the constituent parse tree are described further, for example, in FIGs. 8A and 8B, respectively. The construction of the dependency parse tree and the constituent parse tree are described, for example, in FIG. 7.

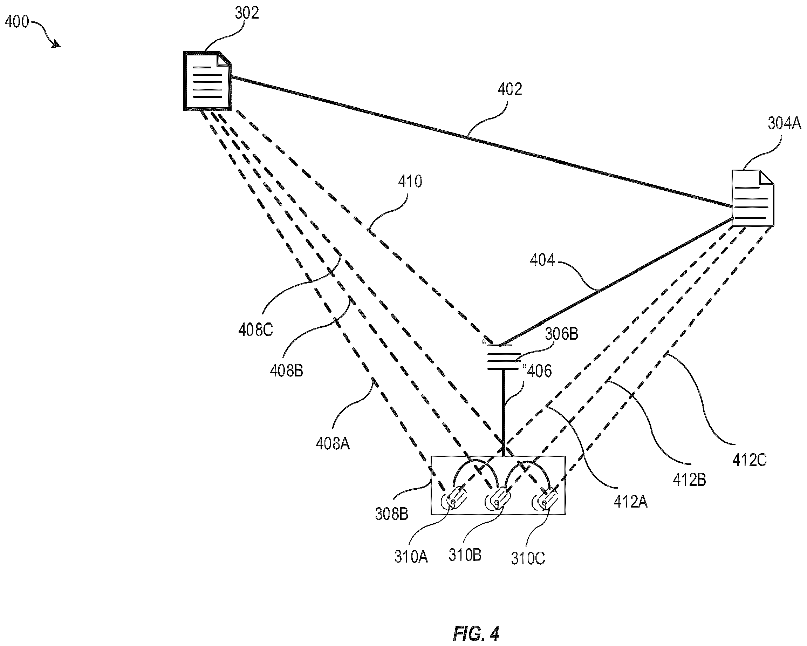

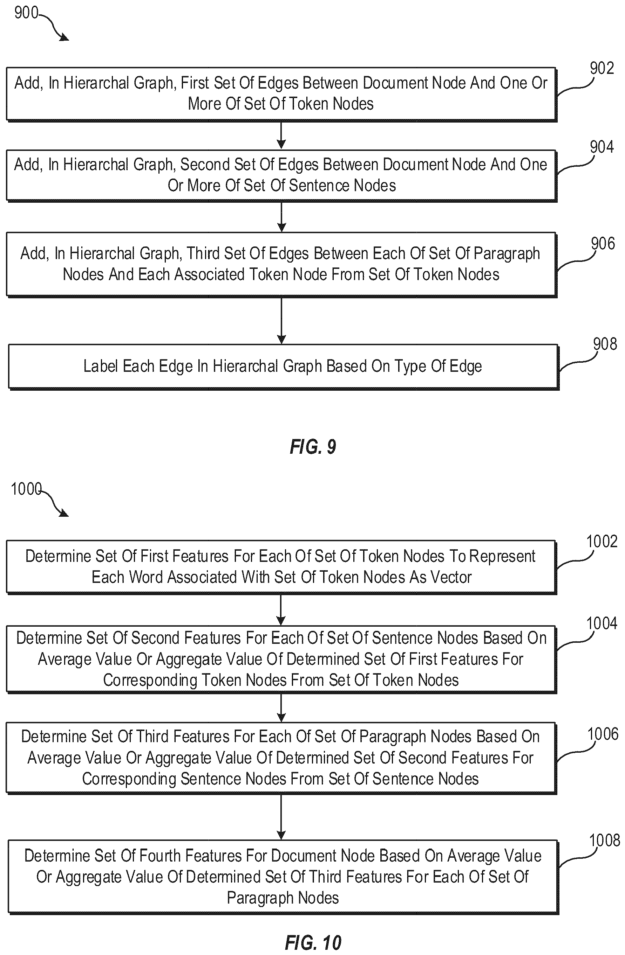

The system may be configured to add one or more sets of additional edges or connections in the hierarchal graph. For example, the system may be configured to add, in the hierarchal graph, a first set of edges between the document node and one or more of the set of token nodes. Further, the system may be configured to add, in the hierarchal graph, a second set of edges between the document node and one or more of the set of sentence nodes. Furthermore, the system may be configured to add, in the hierarchal graph, a third set of edges between each of the set of paragraph nodes and each associated token node from the set of token nodes. The system may be further configured to label each edge in the hierarchal graph based on a type of the edge. The addition of the one or more sets of additional edges in the hierarchal graph is described, for example, in FIGs. 4 and 9.

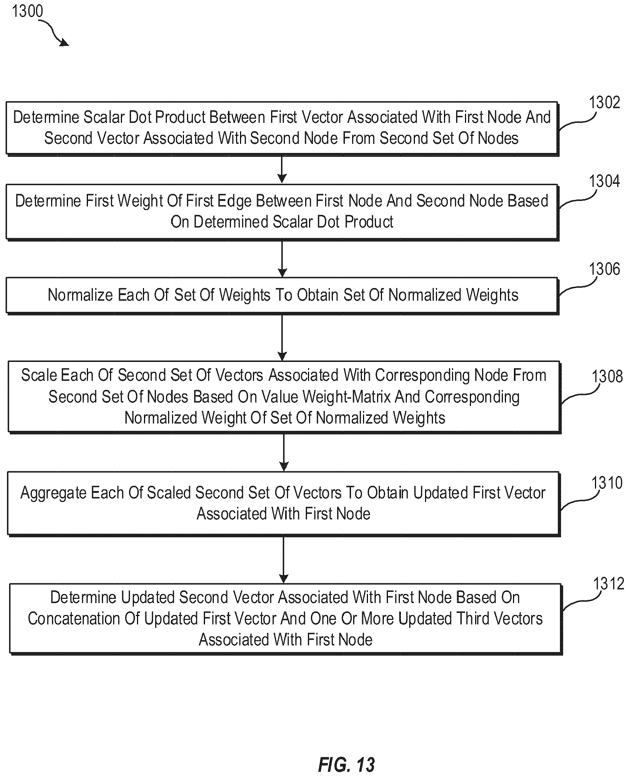

The system may be further configured to determine a set of weights based on a language attention model. The set of weights may be associated with a set of edges between a first node and each of a second set of nodes connected to the first node in the constructed hierarchal graph. Herein, the set of edges may include at least one of: the first set of edges, the second set of edges, or the third set of edges. The language attention model may correspond to a model to assign a contextual significance to each of a plurality of words in a sentence of the document. For example, a first weight may be associated with an edge between a first token node and a corresponding connected first paragraph node. The first weight may be indicative of an importance associated with a word represented by the first token node with respect to a paragraph represented by the first paragraph node. The determination of the set of weights is described further, for example, in FIG. 13.

The system may be further configured to apply a graph neural network (GNN) model on the constructed hierarchal graph based on at least one of: a set of first features associated with each of the set of token nodes, and the determined set of weights. The GNN model may correspond to a Graph Attention Network (GAT). The system may be further configured to update a set of features associated with each of the plurality of nodes based on the application of the GNN model on the constructed hierarchal graph. An initialization of the set of features associated with each of the plurality of nodes is described further, for example, in FIG. 10. The updating of the set of features associated with each of the plurality of nodes is described further, for example, in FIG. 13.

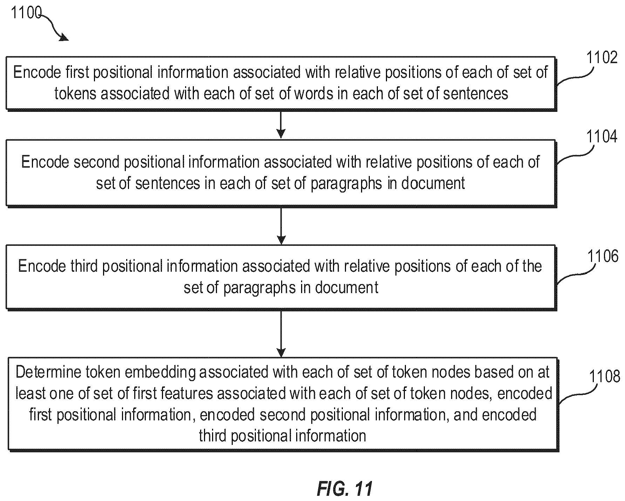

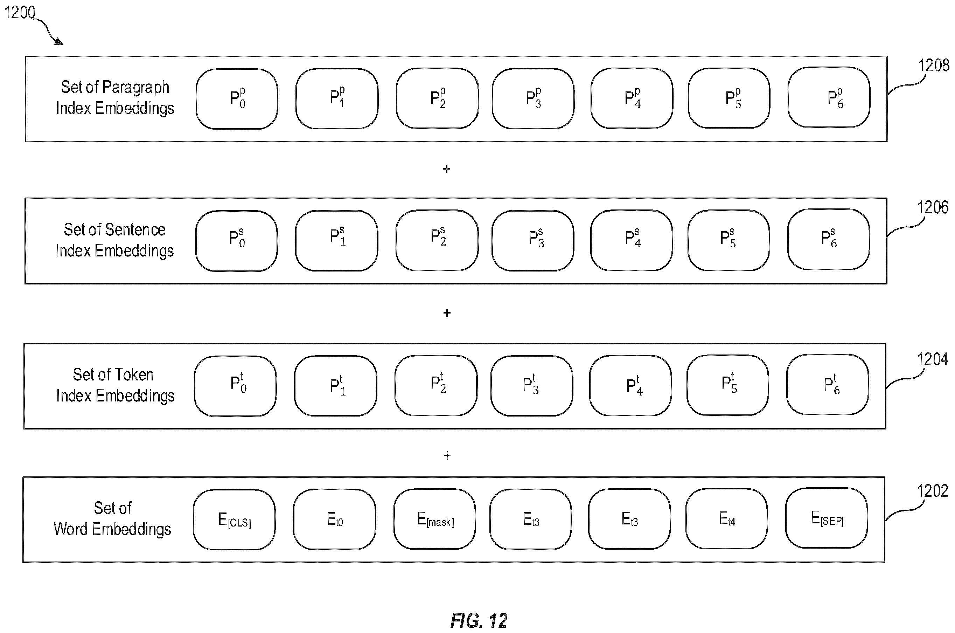

The system may be further configured to encode first positional information, second positional information, and third positional information. The system may determine a token embedding associated with each of the set of token nodes based on at least one of: the set of first features associated with each of the set of token nodes, the encoded first positional information, the encoded second positional information, and the encoded third positional information. The applying the GNN model on the constructed hierarchal graph may be further based on the determined token embeddings associated with each of the set of token nodes. The first positional information may be associated with relative positions of each of a set of tokens associated with each of a set of words in each of a set of sentences in the document. Further, the second positional information may be associated with relative positions of each of the set of sentences in each of a set of paragraphs in the document. Furthermore, the third positional information may be associated with relative positions of each of the set of paragraphs in the document. The determination of the token embeddings based on positional information is described further, for example, in FIGs. 11 and 12.

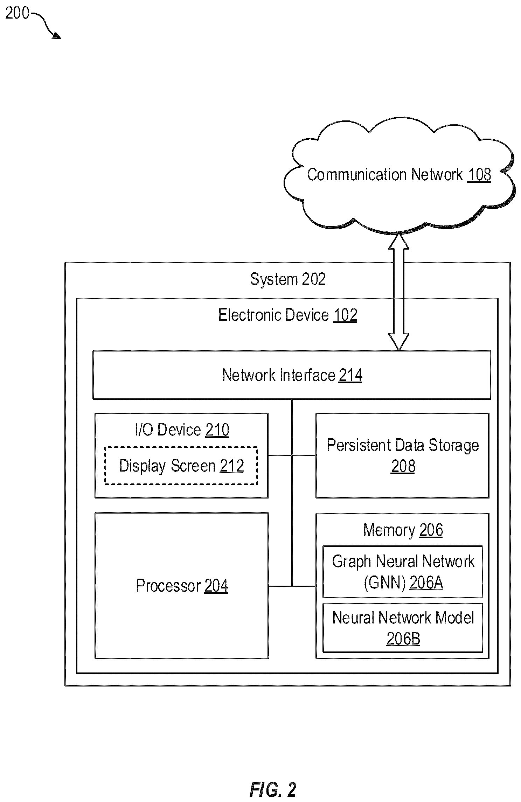

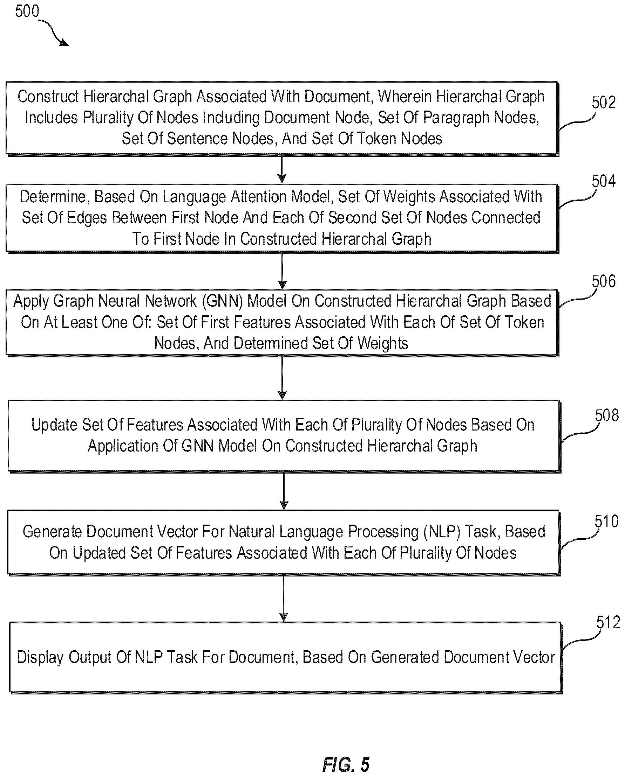

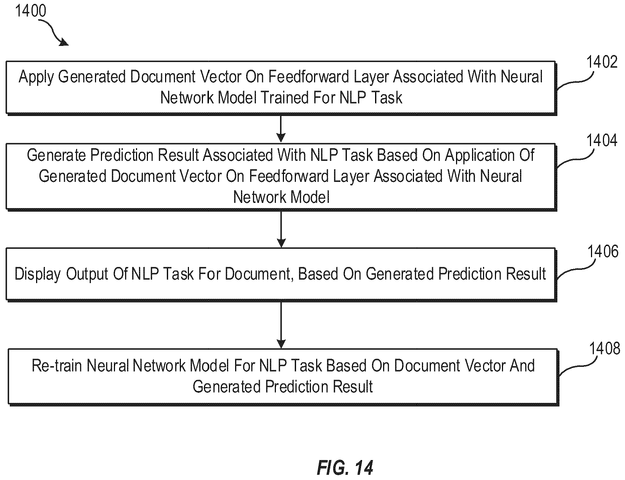

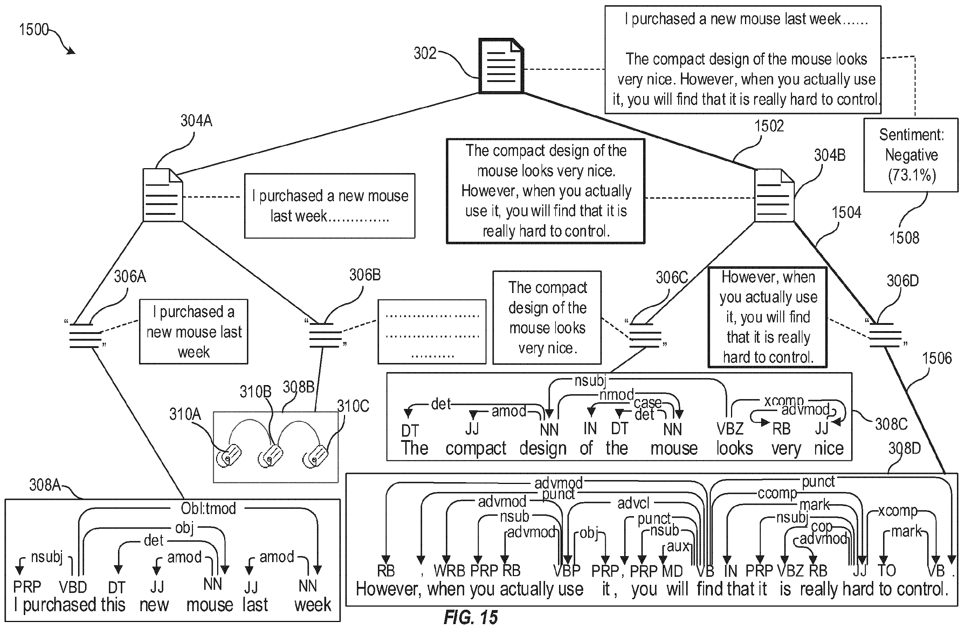

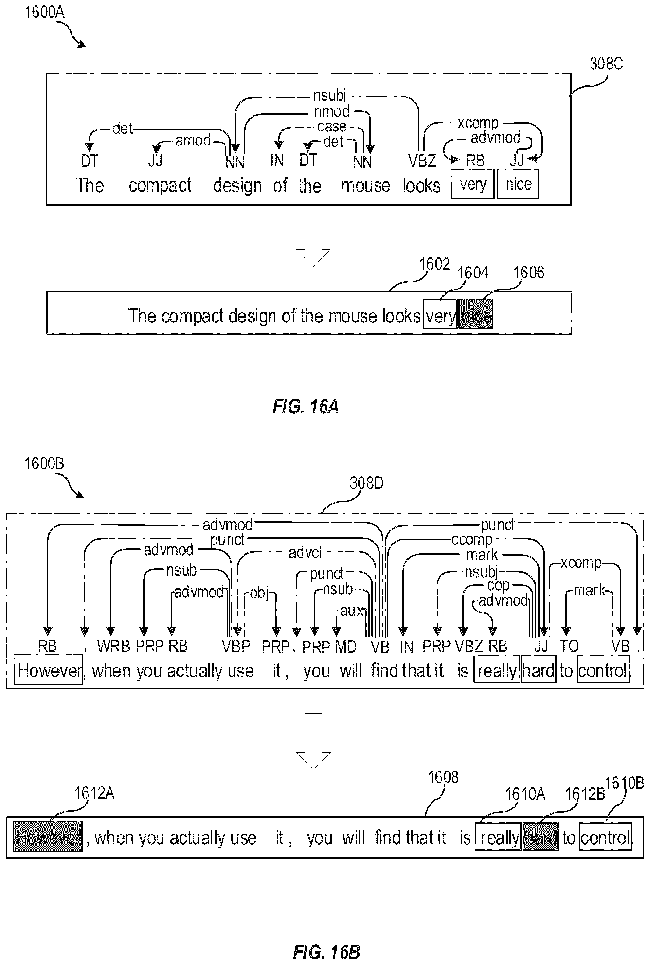

The system may be further configured to generate a document vector for an NLP task, based on the updated set of features associated with each of the plurality of nodes. The NLP task may correspond to a task associated with an analysis of a natural language text in the document based on a neural network model (shown in FIG. 2). The generation of the document vector is described further, for example, in FIG. 5. An exemplary operation for a use of the document vector for the analysis of the document for the NLP task is described, for example, in FIG. 14. The system may be further configured to display an output of the NLP task for the document, based on the generated document vector. In an example, the displayed output may include an indication of at least one of: one or more first words (i.e. important or key words), one or more first sentences (i.e. important or key sentences), or one or more first paragraphs (i.e. important or key paragraphs) in the document. In another example, the displayed output may include a representation of the constructed hierarchal graph or a part of the constructed hierarchal graph, and an indication of important nodes in the represented hierarchal graph or in the part of the hierarchal graph based on the determined set of weights. Examples of the display of the output are described further, for example, in FIGs. 15, 16A, and 16B.

Typically, analysis of a natural language text in a document may include construction of a parse tree for representation of each sentence in the document. Conventional systems may generate a sentence level parsing tree that may be a homogenous graph including nodes of one type, i.e., token nodes that may represent different words in a sentence. In certain types of documents, such as review documents (e.g., but not limited to, documents associated with product reviews and movie reviews), the document may include multiple sentences that may express opposing opinions. Further, in some cases, a sentence on its own may not express a strong sentiment, however, a paragraph-level context may be indicative of the sentiment of the sentence. The conventional system may not provide accurate natural language processing results in at least such cases. The disclosed system, on the other hand, constructs a hierarchal graph that includes heterogenous nodes including a document node, a set of paragraph nodes, a set of sentence nodes, and a set of token nodes. The disclosed system captures a global structure of the document in the constructed hierarchal graph and thereby solves the aforementioned problems of the conventional systems. Further, disclosed system may have a reasonable computational cost as compared to the conventional systems.

Embodiments of the present disclosure are explained with reference to the accompanying drawings.

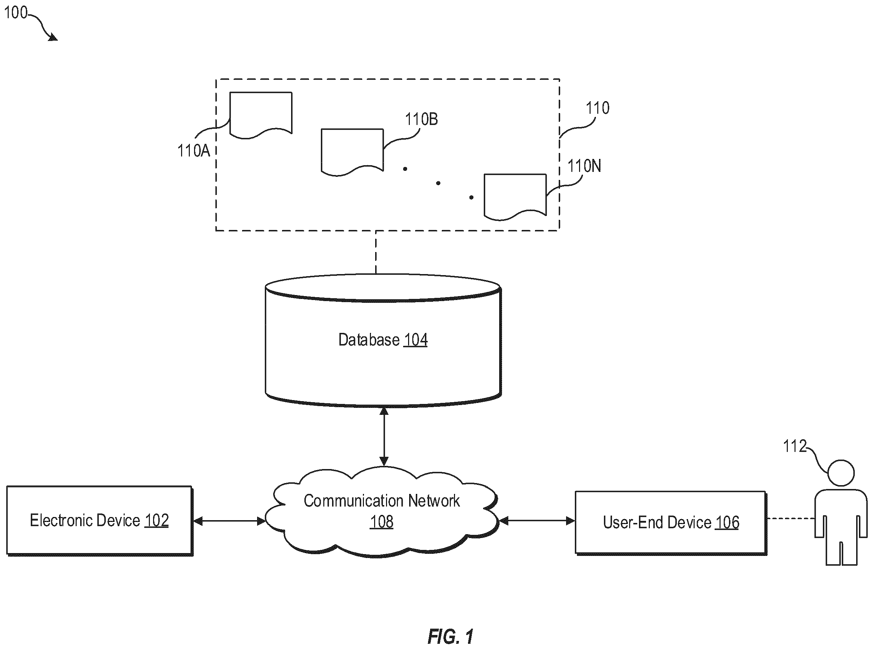

FIG. 1 is a diagram representing an example environment related to analysis of a natural language text in a document, arranged in accordance with at least one embodiment described in the present disclosure. With reference to FIG. 1, there is shown an environment 100. The environment 100 may include an electronic device 102, a database 104, a user-end device 106, and a communication network 108. The electronic device 102, the database 104, and the user-end device 106 may be communicatively coupled to each other, via the communication network 108. In FIG. 1, there is further shown a set of documents 110 including a first document 110A, a second document 110B, ... and an Nth document 110N. The set of documents 110 may be stored in the database 104. There is further shown a user 112 who may be associated with or operating the electronic device 102 or the user-end device 106.

The electronic device 102 may comprise suitable logic, circuitry, interfaces, and/or code that may be configured to analyze a natural language text in a document, such as, the first document 110A. The electronic device 102 may retrieve the document (e.g., the first document 110A) from the database 104. The electronic device 102 maybe configured to construct a hierarchal graph associated with the retrieved document (e.g., the first document 110A). The hierarchal graph may be heterogenous and may include a plurality of nodes of different types. The plurality of nodes may include a document node, a set of paragraph nodes each connected to the document node, a set of sentence nodes each connected to a corresponding one of the set of paragraph nodes, and a set of token nodes each connected to a corresponding one of the set of sentence nodes. An example of the constructed hierarchal graph is described further, for example, in FIG. 3. The construction of the hierarchal graph is described further, for example, in FIG. 6.

The electronic device 102 may be further configured to determine a set of weights based on a language attention model. The set of weights may be associated with a set of edges between a first node and each of a second set of nodes connected to the first node in the constructed hierarchal graph. The language attention model may correspond to a model to assign a contextual significance to each of a plurality of words in a sentence of the document (e.g., the first document 110A). The determination of the set of weights is described further, for example, in FIG. 13.

The electronic device 102 may be further configured to apply a graph neural network (GNN) model (shown in FIG. 2) on the constructed hierarchal graph based on at least one of: a set of first features associated with each of the set of token nodes, and the determined set of weights. The GNN model may correspond to a Graph Attention Network (GAT). The electronic device 102 may be further configured to update a set of features associated with each of the plurality of nodes based on the application of the GNN model on the constructed hierarchal graph. An initialization of the set of features associated with each of the plurality of nodes is described further, for example, in FIG. 10. The updating of the set of features associated with each of the plurality of nodes is described further, for example, in FIG. 13.

The electronic device 102 may be further configured to generate a document vector for a natural language processing (NLP) task, based on the updated set of features associated with each of the plurality of nodes. The NLP task may correspond to a task associated with an analysis of a natural language text in the document (e.g., the first document 110A) based on a neural network model. The generation of the document vector is described further, for example, in FIG. 5. An exemplary operation for a use of the document vector for the analysis of the document for the NLP task is described, for example, in FIG. 14. The electronic device 102 may be further configured to display an output of the NLP task for the document (e.g., the first document 110A), based on the generated document vector. In an example, the displayed output may include an indication of at least one of: one or more important words, one or more important sentences, or one or more important paragraphs in the document (e.g., the first document 110A). In another example, the displayed output may include a representation of the constructed hierarchal graph or a part of the constructed hierarchal graph, and an indication of important nodes in the represented hierarchal graph or in the part of the hierarchal graph based on the determined set of weights. Examples of the display of the output are described further, for example, in FIGs. 15, 16A, and 16B.

Examples of the electronic device 102 may include, but are not limited to, a natural language processing (NLP)-capable device, a mobile device, a desktop computer, a laptop, a computer work-station, a computing device, a mainframe machine, a server, such as a cloud server, and a group of servers. In one or more embodiments, the electronic device 102 may include a user-end terminal device and a server communicatively coupled to the user-end terminal device. The electronic device 102 may be implemented using hardware including a processor, a microprocessor (e.g., to perform or control performance of one or more operations), a field-programmable gate array (FPGA), or an application-specific integrated circuit (ASIC). In some other instances, the electronic device 102 may be implemented using a combination of hardware and software.

The database 104 may comprise suitable logic, interfaces, and/or code that may be configured to store the set of documents 110. The database 104 may be a relational or a non-relational database. Also, in some cases, the database 104 may be stored on a server, such as a cloud server or may be cached and stored on the electronic device 102. The server of the database 104 may be configured to receive a request for a document in the set of documents 110 from the electronic device 102, via the communication network 108. In response, the server of the database 104 may be configured to retrieve and provide the requested document to the electronic device 102 based on the received request, via the communication network 108. Additionally, or alternatively, the database 104 may be implemented using hardware including a processor, a microprocessor (e.g., to perform or control performance of one or more operations), a field-programmable gate array (FPGA), or an application-specific integrated circuit (ASIC). In some other instances, the database 104 may be implemented using a combination of hardware and software.

The user-end device 106 may comprise suitable logic, circuitry, interfaces, and/or code that may be configured to generate a document (e.g., the first document 110A) including a natural language text. For example, the user-end device 106 may include a word processing application to generate the document. Alternatively, or additionally, the user-end device 106 may include a web-browser software or an electronic mail software, through which the user-end device 106 may receive the document. The user-end device 106 may upload the generated document to the electronic device 102 for analysis of the natural language text in the document. In addition, the user-end device 106 may upload the generated document to the database 104 for storage. The user-end device 106 may be further configured to receive information associated with an output of an NLP task for the document from the electronic device 102. The user-end device 106 may display the output of the NLP task for the document on a display screen of the user-end device 106 for the user 112. Examples of the user-end device 106 may include, but are not limited to, a mobile device, a desktop computer, a laptop, a computer work-station, a computing device, a mainframe machine, a server, such as a cloud server, and a group of servers. Although in FIG. 1, the user-end device 106 is separated from the electronic device 102; however, in some embodiments, the user-end device 106 may be integrated in the electronic device 102, without a deviation from the scope of the disclosure.

The communication network 108 may include a communication medium through which the electronic device 102 may communicate with the server which may store the database 104, and the user-end device 106. Examples of the communication network 108 may include, but are not limited to, the Internet, a cloud network, a Wireless Fidelity (Wi-Fi) network, a Personal Area Network (PAN), a Local Area Network (LAN), and/or a Metropolitan Area Network (MAN). Various devices in the environment 100 may be configured to connect to the communication network 108, in accordance with various wired and wireless communication protocols. Examples of such wired and wireless communication protocols may include, but are not limited to, at least one of a Transmission Control Protocol and Internet Protocol (TCP/IP), User Datagram Protocol (UDP), Hypertext Transfer Protocol (HTTP), File Transfer Protocol (FTP), ZigBee, EDGE, IEEE 802.11, light fidelity(Li-Fi), 802.16, IEEE 802.11s, IEEE 802.11g, multi-hop communication, wireless access point (AP), device to device communication, cellular communication protocols, and/or Bluetooth (BT) communication protocols, or a combination thereof.

Modifications, additions, or omissions may be made to FIG. 1 without departing from the scope of the present disclosure. For example, the environment 100 may include more or fewer elements than those illustrated and described in the present disclosure. For instance, in some embodiments, the environment 100 may include the electronic device 102 but not the database 104 and the user-end device 106. In addition, in some embodiments, the functionality of each of the database 104 and the user-end device 106 may be incorporated into the electronic device 102, without a deviation from the scope of the disclosure.

FIG. 2 is a block diagram that illustrates an exemplary electronic device for analysis of a natural language text in a document, arranged in accordance with at least one embodiment described in the present disclosure. FIG. 2 is explained in conjunction with elements from FIG. 1. With reference to FIG. 2, there is shown a block diagram 200 of a system 202 including the electronic device 102. The electronic device 102 may include a processor 204, a memory 206, a persistent data storage 208, an input/output (I/O) device 210, a display screen 212, and a network interface 214. The memory 206 may further include a graph neural network (GNN) model 206A and a neural network model 206B.

The processor 204 may comprise suitable logic, circuitry, and/or interfaces that may be configured to execute program instructions associated with different operations to be executed by the electronic device 102. For example, some of the operations may include constructing the hierarchal graph associated with the document, determining the set of weights based on a language attention model, and applying the GNN model on the constructed hierarchal graph. The operations may further include updating the set of features associated with each of the plurality of nodes, generating the document vector for the NLP task, and displaying the output of the NLP task. The processor 204 may include any suitable special-purpose or general-purpose computer, computing entity, or processing device including various computer hardware or software modules and may be configured to execute instructions stored on any applicable computer-readable storage media. For example, the processor 204 may include a microprocessor, a microcontroller, a digital signal processor (DSP), an application-specific integrated circuit (ASIC), a Field-Programmable Gate Array (FPGA), or any other digital or analog circuitry configured to interpret and/or to execute program instructions and/or to process data.

Although illustrated as a single processor in FIG. 2, the processor 204 may include any number of processors configured to, individually or collectively, perform or direct performance of any number of operations of the electronic device 102, as described in the present disclosure. Additionally, one or more of the processors may be present on one or more different electronic devices, such as different servers. In some embodiments, the processor 204 may be configured to interpret and/or execute program instructions and/or process data stored in the memory 206 and/or the persistent data storage 208. In some embodiments, the processor 204 may fetch program instructions from the persistent data storage 208 and load the program instructions in the memory 206. After the program instructions are loaded into the memory 206, the processor 204 may execute the program instructions. Some of the examples of the processor 204 may be a Graphics Processing Unit (GPU), a Central Processing Unit (CPU), a Reduced Instruction Set Computer (RISC) processor, an ASIC processor, a Complex Instruction Set Computer (CISC) processor, a co-processor, and/or a combination thereof.

The memory 206 may comprise suitable logic, circuitry, interfaces, and/or code that may be configured to store program instructions executable by the processor 204. In certain embodiments, the memory 206 may be configured to store operating systems and associated application-specific information. The memory 206 may include computer-readable storage media for carrying or having computer-executable instructions or data structures stored thereon. Such computer-readable storage media may include any available media that may be accessed by a general-purpose or special-purpose computer, such as the processor 204. By way of example, and not limitation, such computer-readable storage media may include tangible or non-transitory computer-readable storage media including Random Access Memory (RAM), Read-Only Memory (ROM), Electrically Erasable Programmable Read-Only Memory (EEPROM), Compact Disc Read-Only Memory (CD-ROM) or other optical disk storage, magnetic disk storage or other magnetic storage devices, flash memory devices (e.g., solid state memory devices), or any other storage medium which may be used to carry or store particular program code in the form of computer-executable instructions or data structures and which may be accessed by a general-purpose or special-purpose computer. Combinations of the above may also be included within the scope of computer-readable storage media. Computer-executable instructions may include, for example, instructions and data configured to cause the processor 204 to perform a certain operation or group of operations associated with the electronic device 102.

The persistent data storage 208 may comprise suitable logic, circuitry, interfaces, and/or code that may be configured to store program instructions executable by the processor 204, operating systems, and/or application-specific information, such as logs and application-specific databases. The persistent data storage 208 may include computer-readable storage media for carrying or having computer-executable instructions or data structures stored thereon. Such computer-readable storage media may include any available media that may be accessed by a general-purpose or a special-purpose computer, such as the processor 204.

By way of example, and not limitation, such computer-readable storage media may include tangible or non-transitory computer-readable storage media including Compact Disc Read-Only Memory (CD-ROM) or other optical disk storage, magnetic disk storage or other magnetic storage devices (e.g., Hard-Disk Drive (HDD)), flash memory devices (e.g., Solid State Drive (SSD), Secure Digital (SD) card, other solid state memory devices), or any other storage medium which may be used to carry or store particular program code in the form of computer-executable instructions or data structures and which may be accessed by a general-purpose or special-purpose computer. Combinations of the above may also be included within the scope of computer-readable storage media. Computer-executable instructions may include, for example, instructions and data configured to cause the processor 204 to perform a certain operation or group of operations associated with the electronic device 102.

In some embodiments, either of the memory 206, the persistent data storage 208, or combination may store a document from the set of documents 110 retrieved from the database 104. Either of the memory 206, the persistent data storage 208, or combination may further store information associated with the constructed hierarchal graph, the determined set of weights, the set of features associated with each of the plurality of nodes of the constructed hierarchal graph, the generated document vector, the GNN model 206A, and the neural network model 206B trained for the NLP task.

The neural network model 206B may be a computational network or a system of artificial neurons, arranged in a plurality of layers, as nodes. The plurality of layers of the neural network may include an input layer, one or more hidden layers, and an output layer. Each layer of the plurality of layers may include one or more nodes (or artificial neurons, represented by circles, for example). Outputs of all nodes in the input layer may be coupled to at least one node of hidden layer(s). Similarly, inputs of each hidden layer may be coupled to outputs of at least one node in other layers of the neural network model. Outputs of each hidden layer may be coupled to inputs of at least one node in other layers of the neural network model. Node(s) in the final layer may receive inputs from at least one hidden layer to output a result. The number of layers and the number of nodes in each layer may be determined from hyper-parameters of the neural network model. Such hyper-parameters may be set before or while training the neural network model on a training dataset.

Each node of the neural network model 206B may correspond to a mathematical function (e.g., a sigmoid function or a rectified linear unit) with a set of parameters, tunable during training of the neural network model 206B. The set of parameters may include, for example, a weight parameter, a regularization parameter, and the like. Each node may use the mathematical function to compute an output based on one or more inputs from nodes in other layer(s) (e.g., previous layer(s)) of the neural network model. All or some of the nodes of the neural network model 206B may correspond to same or a different same mathematical function.

In training of the neural network model 206B, one or more parameters of each node of the neural network model may be updated based on whether an output of the final layer for a given input (from the training dataset) matches a correct result based on a loss function for the neural network model 206B. The above process may be repeated for same or a different input till a minima of loss function may be achieved and a training error may be minimized. Several methods for training are known in art, for example, gradient descent, stochastic gradient descent, batch gradient descent, gradient boost, meta-heuristics, and the like.

The neural network model 206B may include electronic data, such as, for example, a software program, code of the software program, libraries, applications, scripts, or other logic or instructions for execution by a processing device, such as the processor 204. The neural network model 206B may include code and routines configured to enable a computing device including the processor 204 to perform one or more natural language processing tasks for analysis of a natural language text in a document. Additionally, or alternatively, the neural network model 206B may be implemented using hardware including a processor, a microprocessor (e.g., to perform or control performance of one or more operations), a field-programmable gate array (FPGA), or an application-specific integrated circuit (ASIC). Alternatively, in some embodiments, the neural network may be implemented using a combination of hardware and software.

Examples of the neural network model 206B may include, but are not limited to, a deep neural network (DNN), a convolutional neural network (CNN), a recurrent neural network (RNN), a CNN-recurrent neural network (CNN-RNN), R-CNN, Fast R-CNN, Faster R-CNN, an artificial neural network (ANN), (You Only Look Once) YOLO network, a Long Short Term Memory (LSTM) network based RNN, CNN+ANN, LSTM+ANN, a gated recurrent unit (GRU)-based RNN, a fully connected neural network, a Connectionist Temporal Classification (CTC) based RNN, a deep Bayesian neural network, a Generative Adversarial Network (GAN), and/or a combination of such networks. In some embodiments, the neural network model 206B may include numerical computation techniques using data flow graphs. In certain embodiments, the neural network model 206B may be based on a hybrid architecture of multiple Deep Neural Networks (DNNs).

The graph neural network (GNN) 206A may comprise suitable logic, circuitry, interfaces, and/or code that may configured to classify or analyze input graph data (for example, the hierarchal graph) to generate an output result for a particular real-time application. For example, a trained GNN model 206A may recognize different nodes (such as, a token node, a sentence node, or a paragraph node) in the input graph data, and edges between each node in the input graph data. The edges may correspond to different connections or relationship between each node in the input graph data (e.g. hierarchal graph). Based on the recognized nodes and edges, the trained GNN model 206A may classify different nodes within the input graph data, into different labels or classes. In an example, the trained GNN model 206A related to an application of sentiment analysis, may use classification of the different nodes to determine key words (i.e. important words), key sentences (i.e. important sentences), and key paragraphs (i.e. important paragraphs) in the document. In an example, a particular node (such as, a token node) of the input graph data may include a set of features associated therewith. The set of features may include, but are not limited to, a token embedding, a sentence embedding, or a paragraph embedding, associated with a token node, a sentence node, or a paragraph node, respectively. Further, each edge may connect with different nodes having similar set of features. The electronic device 102 may be configured to encode the set of features to generate a feature vector using GNN model 206A. After the encoding, information may be passed between the particular node and the neighboring nodes connected through the edges. Based on the information passed to the neighboring nodes, a final vector may be generated for each node. Such final vector may include information associated with the set of features for the particular node as well as the neighboring nodes, thereby providing reliable and accurate information associated with the particular node. As a result, the GNN model 206A may analyze the document represented as the hierarchal graph. The GNN model 206A may be implemented using hardware including a processor, a microprocessor (e.g., to perform or control performance of one or more operations), a field-programmable gate array (FPGA), or an application-specific integrated circuit (ASIC). In some other instances, the GNN model 206A may be a code, a program, or set of software instruction. The GNN model 206A may be implemented using a combination of hardware and software.

In some embodiments, the GNN model 206A may correspond to multiple classification layers for classification of different nodes in the input graph data, where each successive layer may use an output of a previous layer as input. Each classification layer may be associated with a plurality of edges, each of which may be further associated with plurality of weights. During training, the GNN model 206A may be configured to filter or remove the edges or the nodes based on the input graph data and further provide an output result (i.e. a graph representation) of the GNN model 206A. Examples of the GNN model 206A may include, but are not limited to, a graph convolution network (GCN), a Graph Spatial-Temporal Networks with GCN, a recurrent neural network (RNN), a deep Bayesian neural network, a fully connected GNN (such as Transformers), and/or a combination of such networks.

The I/O device 210 may include suitable logic, circuitry, interfaces, and/or code that may be configured to receive a user input. For example, the I/O device 210 may receive a user input to retrieve a document from the database 104. In another example, the I/O device 210 may receive a user input to create a new document, edit an existing document (such as, the retrieved document), and/or store the created or edited document. The I/O device 210 may further receive a user input that may include an instruction to analyze a natural language text in the document. The I/O device 210 may be further configured to provide an output in response to the user input. For example, the I/O device 210 may display an output of an NLP task for the document on the display screen 212. The I/O device 210 may include various input and output devices, which may be configured to communicate with the processor 204 and other components, such as the network interface 214. Examples of the input devices may include, but are not limited to, a touch screen, a keyboard, a mouse, a joystick, and/or a microphone. Examples of the output devices may include, but are not limited to, a display (e.g., the display screen 212) and a speaker.

The display screen 212 may comprise suitable logic, circuitry, interfaces, and/or code that may be configured to display an output of an NLP task for the document. The display screen 212 may be configured to receive the user input from the user 112. In such cases the display screen 212 may be a touch screen to receive the user input. The display screen 212 may be realized through several known technologies such as, but not limited to, a Liquid Crystal Display (LCD) display, a Light Emitting Diode (LED) display, a plasma display, and/or an Organic LED (OLED) display technology, and/or other display technologies.

The network interface 214 may comprise suitable logic, circuitry, interfaces, and/or code that may be configured to establish a communication between the electronic device 102, the database 104, and the user-end device 106, via the communication network 108. The network interface 214 may be implemented by use of various known technologies to support wired or wireless communication of the electronic device 102 via the communication network 108. The network interface 214 may include, but is not limited to, an antenna, a radio frequency (RF) transceiver, one or more amplifiers, a tuner, one or more oscillators, a digital signal processor, a coder-decoder (CODEC) chipset, a subscriber identity module (SIM) card, and/or a local buffer.

Modifications, additions, or omissions may be made to the example electronic device 102 without departing from the scope of the present disclosure. For example, in some embodiments, the example electronic device 102 may include any number of other components that may not be explicitly illustrated or described for the sake of brevity.

FIG. 3 is a diagram that illustrates an example hierarchal graph associated with a document, arranged in accordance with at least one embodiment described in the present disclosure. FIG. 3 is explained in conjunction with elements from FIG. 1 and FIG. 2. With reference to FIG. 3, there is shown an example hierarchal graph 300. The example hierarchal graph 300 may include a plurality of nodes including a document node 302 as a root node at a first level (i.e., a highest level) of the hierarchal graph 300. The document node 302 may represent a document (e.g., the first document 110A) including a natural language text arranged in one or more paragraphs including one or more sentences each. For example, as shown in FIG. 3, the document may include the natural language text, such as,

" I purchased a new mouse last week....

The compact design of the mouse looks very nice. However, when you actually use it, you will find that it is really hard to control."

The plurality of nodes of the hierarchal graph 300 may further include a set of paragraph nodes at a second level (i.e., a second highest level below the first level). Each of the set of paragraph nodes may be connected to the document node 302. The set of paragraph nodes may include a first paragraph node 304A and a second paragraph node 304B. The first paragraph node 304A may represent a first paragraph in the document and the second paragraph node 304B may represent a second paragraph in the document. For example, the natural language text in the first paragraph may be: "I purchased a new mouse last week....". Further, in an example, the natural language text in the second paragraph may be: "The compact design of the mouse looks very nice. However, when you actually use it, you will find that it is really hard to control.", as shown in FIG. 3.

The plurality of nodes of the hierarchal graph 300 may further include a set of sentence nodes at a third level (i.e., a third highest level below the second level). The set of sentence nodes may include a first sentence node 306A, a second sentence node 306B, a third sentence node 306C, and a fourth sentence node 306D. Each of the set of sentence nodes may represent a sentence in the document. For example, the first sentence node 306A may represent a first sentence, such as, "I purchased a new mouse last week." Each of the set of sentence nodes may be connected to a corresponding one of the set of paragraph nodes in the hierarchal graph 300. For example, as shown in FIG. 3, the first sentence may belong to the first paragraph in the document. Thus, the first sentence node 306A may be connected to the first paragraph node 304A in the hierarchal graph 300. Similarly, the third sentence node 306C (i.e. third sentence) and the fourth sentence node 306D (i.e. fourth sentence) may be connected to the second paragraph node 304B in the hierarchal graph 300 as shown in FIG. 3.

The plurality of nodes of the hierarchal graph 300 may further include a set of token nodes at a fourth level (i.e., a lowest level of the hierarchal graph 300 below the third level). A group of token nodes from the set of token nodes that may be associated with a set of words in a sentence may collectively form a parsing tree for the sentence in the hierarchal graph 300. For example, in FIG. 3, there is shown a first parsing tree 308A for the first sentence (i.e., "I purchased a new mouse last week.") associated with the first sentence node 306A. There is further shown a second parsing tree 308B for a second sentence associated with the second sentence node 306B, a third parsing tree 308C for the third sentence associated with the third sentence node 306C, and a fourth parsing tree 308D for the fourth sentence associated with the fourth sentence node 306D. In FIG. 3, there is further shown a group of token nodes (for example, a first token node 310A, a second token node 310B, and a third token node 310C) associated with the second parsing tree 308B. An example and construction of a parsing tree is described further, for example, in FIGs. 7, 8A, and 8B.

It may be noted that the hierarchal graph 300 shown in FIG. 3 is presented merely as example and should not be construed to limit the scope of the disclosure.

FIG. 4 is a diagram that illustrates an example scenario of addition of one or more sets of additional edges in the exemplary hierarchal graph of FIG. 3, arranged in accordance with at least one embodiment described in the present disclosure. FIG. 4 is explained in conjunction with elements from FIG. 1, FIG. 2, and FIG. 3. With reference to FIG. 4, there is shown an example scenario 400. The example scenario 400 illustrates a sub-graph from the exemplary hierarchal graph 300. The sub-graph may include the document node 302, the first paragraph node 304A, the second sentence node 306B, and a group of token nodes (including the first token node 310A, the second token node 310B, and the third token node 310C) associated with the second sentence node 306B. With reference to FIG. 3 and FIG. 4, the document node 302 may be connected to the first paragraph node 304A through a first edge 402. Further, the first paragraph node 304A may be connected to the second sentence node 306B through a second edge 404. Furthermore, the second sentence node 306B may be connected to a parsing tree (i.e., the second parsing tree 308B) associated with each of the first token node 310A, the second token node 310B, and the third token node 310C, through a third edge 406. Though not shown in FIG. 4, alternatively, the second sentence node 306B may connect to each of the first token node 310A, the second token node 310B, and the third token node 310C individually, through separate edges.

There is further shown in the scenario 400 that the sub-graph may include one or more sets of additional edges, such as, a first set of edges, a second set of edges, and a third set of edges. The first set of edges may connect the document node 302 with each of the set of token nodes. For example, the first set of edges may include an edge 408A that may connect the document node 302 to the first token node 310A, an edge 408B that may connect the document node 302 to the second token node 310B, and an edge 408C that may connect the document node 302 to the third token node 310C. In an example, the second set of edges may include an edge 410 that may connect the document node 302 to the second sentence node 306B. Further, in an example, the third set of edges may include an edge 412A that may connect the first paragraph node 304A to the first token node 310A, an edge 412B that may connect the first paragraph node 304A to the second token node 310B, and an edge 412C that may connect the first paragraph node 304A to the third token node 310C.

In an embodiment, each edge in the hierarchal graph (e.g., the hierarchal graph 300 of FIG. 3) may be labelled based on a type of the edge. For example, the first edge 402 may be labeled as an edge between a document node (e.g., the document node 302) and a paragraph node (e.g., the first paragraph node 304A). The second edge 404 may be labeled as an edge between a paragraph node (e.g., the first paragraph node 304A) and a sentence node (e.g., the second sentence node 306B). The third edge 406 may be labeled as an edge between a sentence node (e.g., the second sentence node 306B) and a parsing tree (e.g., the second parsing tree 308B). Further, each of the first set of edges (e.g., the edges 408A, 408B, and 408C) may be labeled as edges between a document node (e.g., the document node 302) and a respective token node (e.g., the first token node 310A, the second token node 310B, and the third token node 310C). Each of the second set of edges (e.g., the edge 410) may be labeled as an edge between a document node (e.g., the document node 302) and a sentence node (e.g., the second sentence node 306B). Further, each of the third set of edges (e.g., the edges 412A, 412B, and 412C) may be labeled as edges between a paragraph node (e.g., the first paragraph node 304A) and a respective token node (e.g., the first token node 310A, the second token node 310B, and the third token node 310C). It may be noted that the scenario 400 shown in FIG. 4 is presented merely as example and should not be construed to limit the scope of the disclosure.

FIG. 5 is a diagram that illustrates a flowchart of an example method for analysis of a natural language text in a document, arranged in accordance with at least one embodiment described in the present disclosure. FIG. 5 is explained in conjunction with elements from FIG. 1, FIG. 2, FIG. 3, and FIG. 4. With reference to FIG. 5, there is shown a flowchart 500. The method illustrated in the flowchart 500 may start at 502 and may be performed by any suitable system, apparatus, or device, such as by the example electronic device 102 of FIG. 1 or processor 204 of FIG. 2. Although illustrated with discrete blocks, the steps and operations associated with one or more of the blocks of the flowchart 500 may be divided into additional blocks, combined into fewer blocks, or eliminated, depending on the particular implementation.

At block 502, a hierarchal graph associated with a document may be constructed. In an embodiment, the processor 204 may be configured to construct the hierarchal graph associated with the document. Prior to construction of the hierarchal graph, the processor 204 may retrieve the document (e.g., the first document 110A) from the database 104. The document may correspond to a file (e.g., a text file) including a natural language text. The document may be arranged in one or more paragraphs, each of which may include one or more sentences. The constructed hierarchal graph may include a plurality of nodes including a document node, a set of paragraph nodes each connected to the document node, a set of sentence nodes each connected to a corresponding one of the set of sentence nodes, and a set of token nodes each connected to a corresponding one of the set of sentence nodes. An example of the constructed hierarchal graph is described further, for example, in FIG. 3. The construction of the hierarchal graph is described further, for example, in FIG. 6. The processor 204 may be further configured to add one or more sets of additional edges or connections in the hierarchal graph. The addition of the one or more sets of additional edges in the hierarchal graph is described, for example, in FIGs. 4 and 9.

At block 504, a set of weights may be determined. In an embodiment, the processor 204 may be configured to determine the set of weights based on a language attention model. The set of weights may be associated with a set of edges between a first node and each of a second set of nodes connected to the first node in the constructed hierarchal graph. The language attention model may correspond to a model to assign a contextual significance to each of a plurality of words in a sentence of the document (e.g., the first document 110A). For example, with reference to FIGs. 3 and 4, a first weight maybe associated with an edge (such as edge 412A in FIG. 3) between a first token node (e.g., the first token node 310A as the first node) and a corresponding connected first paragraph node (e.g., the first paragraph node 304A as one of the second set of nodes connected to the first node). The first weight may be indicative of an importance associated with a word represented by the first token node (e.g., the first token node 310A) with respect to a paragraph represented by the first paragraph node (e.g., the first paragraph node 304A). The determination of the set of weights is described further, for example, in FIG. 13.

At block 506, a graph neural network (GNN) model may be applied on the constructed hierarchal graph. In an embodiment, the processor 204 may be configured to apply the GNN model (such as the GNN model 206A shown in FIG. 2) on the constructed hierarchal graph based on at least one of: a set of first features associated with each of the set of token nodes and the determined set of weights. In an embodiment, the GNN model may correspond to a Graph Attention Network (GAT). Prior to the application of the GNN model, the processor 204 may be configured to initialize the set of features associated with each of the plurality of nodes of the constructed hierarchal graph. An initialization of the set of features associated with each of the plurality of nodes is described further, for example, in FIG. 10.

The processor 204 may be further configured to encode first positional information, second positional information, and third positional information. The processor 204 may determine a token embedding associated with each of the set of token nodes based on at least one of: the set of first features associated with each of the set of token nodes, the encoded first positional information, the encoded second positional information, and the encoded third positional information. The applying the GNN model on the constructed hierarchal graph may be further based on the determined token embedding associated with each of the set of token nodes. The first positional information may be associated with relative positions of each of a set of tokens associated with each of a set of words in each of a set of sentences in the document. Further, the second positional information may be associated with relative positions of each of the set of sentences in each of a set of paragraphs in the document. Furthermore, the third positional information may be associated with relative positions of each of the set of paragraphs in the document. The determination of the token embeddings based on positional information is described further, for example, in FIGs. 11 and 12. The application of the GNN model on the constructed hierarchal graph is described further, for example, in FIG. 13.

At block 508, the set of features associated with each of the plurality of nodes of the constructed hierarchal graph may be updated. The processor 204 may be configured to update the set of features associated with each of the plurality of nodes based on the application of the GNN model on the constructed hierarchal graph. The updating of the set of features associated with each of the plurality of nodes is described further, for example, in FIG. 13.

At block 510, a document vector for a natural language processing (NLP) task may be generated. In an embodiment, the processor 204 may be configured to generate the document vector for the NLP task based on the updated set of features associated with the plurality of nodes of the constructed hierarchal graph. The NLP task may correspond to a task associated with an analysis of the natural language text in the document based on a neural network model (such as neural network model 206B shown in FIG. 2). Examples of the NLP tasks associated with analysis of the document may include, but are not limited to, an automatic text summarization, a sentiment analysis task, a topic extraction task, a named-entity recognition task, a parts-of-speech tagging task, a semantic relationship extraction task, a stemming task, a text mining task, a machine translation task, and an automated question answering task. An exemplary operation for a use of the generated document vector for the analysis of the document for the NLP task is described, for example, in FIG. 14.

In an embodiment, the generating the document vector for the NLP task may further include averaging or aggregating the updated set of features associated with each of the plurality of nodes of the constructed hierarchal graph. For example, with reference to FIG. 3, the count of the plurality of nodes in the hierarchal graph 300 may be 42. The processor 204 may calculate an average value or aggregate value of the updated set of features of each of the 42 nodes in the hierarchal graph 300 to obtain the document vector.

In another embodiment, the generating the document vector for the NLP task may further include determining a multi-level clustering of the plurality of nodes. The determination of the multi-level clustering of the plurality of nodes may correspond to a differential pooling technique. For example, the processor 204 may apply the GNN model on a lowest layer (e.g., the fourth level) of the hierarchal graph (e.g., the hierarchal graph 300) to obtain embeddings or updated features of nodes (e.g., the set of token nodes) on the lowest layer. The processor 204 may cluster the lowest layer nodes together based on the updated features of the lowest layer nodes. The processor 204 may further use the updated features of the clustered lowest layer nodes as an input to the GNN model and apply the GNN model on a second lowest layer (e.g., the third level) of the hierarchal graph (e.g., the hierarchal graph 300). The processor 204 may similarly obtain embeddings or updated features of nodes (e.g., the set of sentence nodes) on the second lowest layer. The processor 204 may similarly cluster the second lowest layer nodes together based on the updated features of the second lowest layer nodes. The processor 204 may repeat the aforementioned process for each layer (i.e., level) of the hierarchal graph (e.g., the hierarchal graph 300) to obtain a final vector (i.e., the document vector) for the document.

In yet another embodiment, the generating the document vector for the NLP task may further include applying a multi-level selection of a pre-determined number of top nodes from the plurality of nodes. The application of the multi-level selection of the pre-determined number of top nodes from the plurality of nodes may correspond to a graph pooling technique. For example, the hierarchal graph 300 may have four nodes at a certain level (e.g., the third level that includes the set of sentence nodes). Further, each of the four nodes may have five features. The level (e.g., the third level of the hierarchal graph 300) may have an associated 4x4 dimension adjacency matrix, $A^1$. In an example, the processor 204 may apply a trainable projection vector with five features to the four nodes at the level. The application of the trainable projection vector at the level may include a calculation of an absolute value of a matrix multiplication between a feature matrix (e.g., a 4x5 dimension matrix, $X^1$) associated with the four nodes of the level (i.e., the third level) and a matrix (e.g., a 1x5 dimension matrix, P) of the trainable projection vector. The processor 204 may obtain a score (e.g., a vector y) based on the calculation of the absolute value of the matrix multiplication. The score may be indicative of a closeness of each node in the level (e.g., the third level) to the projection vector. In case a number of top nodes to be selected is two (i.e., the pre-determined number of top nodes is two), the processor 204 may select the top two nodes from the four nodes of the level (i.e., the third level) based on the obtained score (i.e., the vector y) for each of the four nodes. Thus, the top two nodes with the highest score and the second highest score may be selected out of the four nodes. The processor 204 may further record indexes of the selected top two nodes from the level (i.e., the third level) and extract the corresponding nodes from the hierarchal graph (e.g., the hierarchal graph 300) to generate a new graph. The processor 204 may create a pooled feature map $X^{'l}$ and an adjacency matrix $A^{l+1}$ based on the generated new graph. The adjacency matrix $A^{l+1}$ may be an adjacency matrix for the next higher level (i.e., the second level) of the hierarchal graph (e.g., the hierarchal graph 300). The processor 204 may apply an element-wise tanh(.) function to the score vector (i.e., the vector y) to create a gate vector. Further, the processor 204 may calculate a multiplication between the created gate vector and the pooled feature map $X^{'l}$ to obtain an input feature matrix $X^{l+1}$ for the next higher level (i.e., the second level) of the hierarchal graph (e.g., the hierarchal graph 300). Thus, the outputs of the initial level (i.e., the third level in the current example) may be the adjacency matrix $A^{l+1}$ and the input feature matrix $X^{l+1}$, for the next higher level (i.e., the second level) of the hierarchal graph (e.g., the hierarchal graph 300).

At block 512, an output of a natural language processing (NLP) task may be displayed. In an embodiment, the processor 204 may be configured to display the output of the NLP task based on the generated document vector. In an embodiment, the NLP task may correspond to a task to analyze the natural language text in the document based on a neural network model. In an example, the displayed output may include an indication of at least one of: one or more important words, one or more important sentences, or one or more important paragraphs in the document (e.g., the first document 110A). In another example, the displayed output may include a representation of the constructed hierarchal graph or a part of the constructed hierarchal graph, and an indication of important nodes in the represented hierarchal graph or in the part of the hierarchal graph based on the determined set of weights. Examples of the display of the output are described further, for example, in FIGs. 15, 16A, and 16B. Control may pass to end.

Although the flowchart 500 is illustrated as discrete operations, such as 502, 504, 506, 508, 510, and 512. However, in certain embodiments, such discrete operations may be further divided into additional operations, combined into fewer operations, or eliminated, depending on the particular implementation without detracting from the essence of the disclosed embodiments.

FIG. 6 is a diagram that illustrates a flowchart of an example method for construction of a hierarchal graph associated with a document, arranged in accordance with at least one embodiment described in the present disclosure. FIG. 6 is explained in conjunction with elements from FIG. 1, FIG. 2, FIG. 3, FIG. 4, and FIG. 5. With reference to FIG. 6, there is shown a flowchart 600. The method illustrated in the flowchart 600 may start at 602 and may be performed by any suitable system, apparatus, or device, such as by the example electronic device 102 of FIG. 1 or processor 204 of FIG. 2. Although illustrated with discrete blocks, the steps and operations associated with one or more of the blocks of the flowchart 600 may be divided into additional blocks, combined into fewer blocks, or eliminated, depending on the particular implementation.

At block 602, the document (e.g., the first document 110A) may be segmented to identify a set of paragraphs. In an embodiment, the processor 204 may be configured to segment the natural language text in the document (e.g., the first document 110A) to identify the set of paragraphs in the document. For example, the processor 204 may determine a paragraph layout associated with the document based on pre-determined paragraph separators, such as, a page-break separator or a paragraph-break separator. Based on the determined paragraph layout associated with the document, the processor 204 may segment the document to identify the set of paragraphs (i.e. which corresponds to set of paragraph nodes described, for example, in FIG. 3).

At block 604, each paragraph from the set of paragraphs may be parsed to identify a set of sentences. In an embodiment, the processor 204 may be configured to parse each paragraph from the identified set of paragraphs to identify the set of sentences in the document (e.g., the first document 110A). For example, the processor 204 may use an Application Programming Interface (API) associated with an NLP package to parse each paragraph from the set of paragraphs to identify the set of sentences.

At block 606, each sentence from the set of sentences may be parsed to determine a parsing tree associated with a set of tokens associated with the parsed sentence. In an embodiment, the processor 204 may be configured to parse each sentence from the set of sentences to determine the parsing tree associated with the set of tokens associated with the parsed sentence. For example, the processor 204 may use a core NLP toolset to parse each sentence from the set of sentences to determine the parsing tree associated with the set of tokens associated with the parsed sentence. The determination of the parsing tree is described further, for example, in FIG. 7.

At block 608, the hierarchal graph (e.g., the hierarchal graph 300) may be assembled. In an embodiment, the processor 204 may be configured to assemble the hierarchal graph based on the document, the identified set of paragraphs, the identified set of sentences, and the determined parsing tree for each of the identified sentences. The hierarchal graph (e.g., the hierarchal graph 300) may be heterogenous and may include a plurality of nodes of different types (as shown in FIG. 3). The plurality of nodes may include a document node, a set of paragraph nodes each connected to the document node, a set of sentence nodes each connected to a corresponding one of the set of paragraph nodes, and a set of token nodes each connected to a corresponding one of the set of sentence nodes. For example, the document node (e.g., the document node 302) may be a root node at the highest level of the hierarchal graph (e.g., the hierarchal graph 300). The root node may represent the document as a whole. A second level of the hierarchal graph (e.g., the hierarchal graph 300) may include the set of paragraph nodes (e.g., the first paragraph node 304A and the second paragraph node 304B) connected to the root node. Each of the set of paragraph nodes may represent a paragraph in the document. Further, a third level of the hierarchal graph (e.g., the hierarchal graph 300) may include the set of sentence nodes (e.g., the first sentence node 306A, the second sentence node 306B, the third sentence node 306C, and the fourth sentence node 306D shown in FIG. 3) each connected to a corresponding paragraph node. Each of the set of sentence nodes may represent a sentence in a certain paragraph in the document. Further, a fourth level of the hierarchal graph (e.g., the hierarchal graph 300) may include a set of leaf nodes including the set of token nodes (e.g., the first token node 310A, the second token node 310B, and the third token node 310C shown in FIGs. 3-4) each connected to a corresponding sentence node. Each of the set of token node may represent a token associated with a word in a sentence in a certain paragraph in the document. One or more token nodes that correspond to a same sentence may correspond a parsing tree associated with the sentence. Examples of the parsing trees in the hierarchal graph 300 include the first parsing tree 308A, the second parsing tree 308B, the third parsing tree 308C, and the fourth parsing tree 308D. which may be associated with the first sentence node 306A, the second sentence node 306B, the third sentence node 306C, and the fourth sentence node 306D, respectively. An example of the constructed hierarchal graph is described further, for example, in FIG. 3. Control may pass to end.

Although the flowchart 600 is illustrated as discrete operations, such as 602, 604, 606, and 608. However, in certain embodiments, such discrete operations may be further divided into additional operations, combined into fewer operations, or eliminated, depending on the particular implementation without detracting from the essence of the disclosed embodiments.

FIG. 7 is a diagram that illustrates a flowchart of an example method for determination of a parsing tree associated with a set of tokens associated with a sentence, arranged in accordance with at least one embodiment described in the present disclosure. FIG. 7 is explained in conjunction with elements from FIG. 1, FIG. 2, FIG. 3, FIG. 4, FIG. 5, and FIG. 6. With reference to FIG. 7, there is shown a flowchart 700. The method illustrated in the flowchart 700 may start at 702 and may be performed by any suitable system, apparatus, or device, such as by the example electronic device 102 of FIG. 1 or processor 204 of FIG. 2. Although illustrated with discrete blocks, the steps and operations associated with one or more of the blocks of the flowchart 700 may be divided into additional blocks, combined into fewer blocks, or eliminated, depending on the particular implementation.

At block 702, a dependency parse tree may be constructed. In an embodiment, the processor 204 may be configured to construct the dependency parse tree. The dependency parse tree may be associated with a set of words in a parsed sentence (for example, a sentence parsed, as described in FIG. 6 at 606). The dependency parse tree may indicate a dependency relationship between each of the set of words in the parsed sentence. For example, the processor 204 may construct the dependency parse tree from a parsed sentence by use of, but is not limited to, a Stanford NLP toolset. An example of the dependency parse tree is described, for example, in FIG. 8A.

At block 704, a constituent parse tree may be constructed. In an embodiment, the processor 204 may be configured to construct the constituent parse tree. The constituent parse tree may be associated with the set of words in the parsed sentence (for example, a sentence parsed, as described in FIG. 6 at 606). The construction of the constituent parse tree may be based on the constructed dependency parse tree. For example, the processor 204 may construct the constituent parse tree from the parsed sentence by use of a sentence parsing tool, such as, but not limited to, a Barkley sentence parsing tool. The constituent parse tree may be representative of parts of speech associated with each of the words in the parsed sentence. An example of the constituent parse tree is described, for example, in FIG. 8B. Control may pass to end.

Although the flowchart 700 is illustrated as discrete operations, such as 702 and 704. However, in certain embodiments, such discrete operations may be further divided into additional operations, combined into fewer operations, or eliminated, depending on the particular implementation without detracting from the essence of the disclosed embodiments.

FIG. 8A is a diagram that illustrates an example scenario of a dependency parse tree for an exemplary sentence in a document, arranged in accordance with at least one embodiment described in the present disclosure. FIG. 8A is explained in conjunction with elements from FIG. 1, FIG. 2, FIG. 3, FIG. 4, FIG. 5, FIG. 6, and FIG. 7. With reference to FIG. 8A, there is shown an example scenario 800A. The example scenario 800A may include a parsing tree, for example, the third parsing tree 308C associated with the third sentence node 306C in the hierarchal graph 300 shown in FIG. 3. The third sentence node 306C may represent the third sentence in the document associated with the hierarchal graph 300. For example, the third sentence may be: "The compact design of the mouse looks very nice." Thus, the third sentence may include a set of words including a first word 802A (i.e., "the"), a second word 802B (i.e., "compact"), a third word 802C (i.e., "design"), a fourth word 802D (i.e., "of"), a fifth word 802E (i.e., "the"), a sixth word 802F (i.e., "mouse"), a seventh word 802G (i.e., "looks"), an eighth word 802H (i.e., "very"), and a ninth word 802I (i.e., "nice"). In an embodiment, the third parsing tree 308C may be a dependency parse tree associated with the set of words associated with the third sentence in the document associated with the hierarchal graph 300. The dependency parse tree (e.g., the third parsing tree 308C) may indicate a dependency relationship between each of the set of words in a sentence (e.g., the third sentence) in the document associated with the hierarchal graph (e.g., the hierarchal graph 300). The processor 204 may parse the third sentence in the document by use of, but is not limited to, an NLP toolset (e.g., a Stanford NLP toolset) to determine the dependency relationship between each of the set of words in the third sentence and thereby construct the dependency parse tree (e.g., the third parsing tree 308C). In an embodiment, each pair of token nodes in a parse tree, whose corresponding words are related through a dependency relationship with each other, may be connected with each other in the parse tree.

For example, in the third sentence, the first word 802A (i.e., "the") may be a determiner (denoted as, "DT"), the second word 802B (i.e., "compact") may be an adjective (denoted as, "JJ"), the third word 802C (i.e., "design") may be a singular noun (denoted as, "NN"), the fourth word 802D (i.e., "of") may be a preposition (denoted as, "IN"). Further, in the third sentence, the fifth word 802E (i.e., "the") may be a determiner (denoted as, "DT"), the sixth word 802F (i.e., "mouse") may be a singular noun (denoted as, "NN"), the seventh word 802G (i.e., "looks") may be a third person singular present tense verb (denoted as, "VBZ"), the eighth word 802H (i.e., "very") may be an adverb (denoted as, "RB"), and the ninth word 802I (i.e., "nice") may be an adjective (denoted as, "JJ").

In an embodiment, the dependency relationship between each of the set of words in a sentence (e.g., the third sentence) may correspond to a grammatical relationship between each of the set of words. For example, as shown in FIG. 8A, the first word 802A (i.e., "the") may have a determiner (denoted as, "det") relationship with the third word 802C (i.e., "design"). The second word 802B (i.e., "compact") may have an adjectival modifier (denoted as, "amod") relationship with the third word 802C (i.e., "design"). The sixth word 802F (i.e., "mouse") may have a nominal modifier (denoted as, "nmod") relationship with the third word 802C (i.e., "design"), and the third word 802C (i.e., "design") may have a nominal subject (denoted as, "nsubj") relationship with the seventh word 802G (i.e., "looks"). The fourth word 802D (i.e., "of") may have a preposition (denoted as, "case") relationship with the sixth word 802F (i.e., "mouse"). Further, the fifth word 802E (i.e., "the") may have a determiner (denoted as, "det") relationship with the sixth word 802F (i.e., "mouse"). The ninth word 802I (i.e., "nice") may have an open clausal complement (denoted as, "xcomp") relationship with the seventh word 802G (i.e., "looks"). Further, the eighth word 802H (i.e., "very") may have an adverbial modifier (denoted as, "advmod") relationship with the ninth word 802I (i.e., "nice"). It may be noted that the scenario 800A shown in FIG. 8A is presented merely as example and should not be construed to limit the scope of the disclosure.

FIG. 8B is a diagram that illustrates an example scenario of a constituent parse tree for an exemplary sentence in a document, arranged in accordance with at least one embodiment described in the present disclosure. FIG. 8B is explained in conjunction with elements from FIG. 1, FIG. 2, FIG. 3, FIG. 4, FIG. 5, FIG. 6, FIG. 7, and FIG. 8A. With reference to FIG. 8B, there is an example scenario 800B. The example scenario 800B includes a constituent parse tree, for example, a constituent parse tree 804 associated with the third parsing tree 308C (as shown in FIG. 8A) associated with the third sentence node 306C in the hierarchal graph 300. The third sentence node 306C may represent the third sentence in the document associated with the hierarchal graph 300. For example, the third sentence may be: "The compact design of the mouse looks very nice." Thus, the third sentence may include the set of words including the first word 802A (i.e., "the"), the second word 802B (i.e., "compact"), the third word 802C (i.e., "design"), the fourth word 802D (i.e., "of"), the fifth word 802E (i.e., "the"), the sixth word 802F (i.e., "mouse"), the seventh word 802G (i.e., "looks"), the eighth word 802H (i.e., "very"), and the ninth word 8021 (i.e., "nice") as described, for example, in FIG. 8A. In an embodiment, the constituent parse tree 804 associated with the set of words associated with a sentence (e.g., the third sentence) may be constructed based on the dependency parse tree (e.g., the third parsing tree 308C). The constituent parse tree 804 may be representative of parts of speech associated with each of the set of words in a parsed sentence (e.g., the third sentence) in the document associated with the hierarchal graph (e.g., the hierarchal graph 300). The processor 204 may parse the third sentence in the document by use of a sentence parsing tool (e.g., a Barkley sentence parsing tool) to determine the parts of speech associated with each of set of words in the third sentence and thereby construct the constituent parse tree 804.

For example, the processor 204 may parse the third sentence based on the parts of speech associated with each of the set of words in the third sentence and construct the constituent parse tree 804. The processor 204 may create a root node 806 at a first level of the constituent parse tree 800 and label the created root node 806 as "S" to denote a sentence (i.e., the third sentence). At a second level of the constituent parse tree 804, the processor 204 may create a first node 808A and a second node 808B, each connected to the root node 806, to denote non-terminal nodes of the constituent parse tree 804. The processor 204 may label the first node 808A as "NP" to denote a noun phrase of the third sentence and the second node 808B as "VP" to denote a verb phrase of the third sentence. At a third level of the constituent parse tree 804, the processor 204 may fork the first node 808A to create a first node 810A and a second node 810B, each connected to the first node 808A. The processor 204 may further label the first node 810A as "NP" to denote a noun phrase of the third sentence and the second node 810B as a "PP" to denote a prepositional phrase of the third sentence. On the other hand, at the same third level, the processor 204 may also fork the second node 808B to create a third node 810C and a fourth node 810D, each connected to the second node 808B. The processor 204 may label the third node 810C with a parts of speech tag of "VBZ" to denote a third person singular present tense verb, which may correspond to the seventh word 802G (i.e., "looks"). Further, the processor 204 may label the fourth node 810D as "ADJP" to denote an adjective phrase of the third sentence.

At a fourth level of the constituent parse tree 804, the processor 204 may fork the first node 810A to create a first node 812A, a second node 812B, and a third node 812C, each connected to the first node 810A. The processor 204 may label the first node 812A with a parts of speech tag of "DT" to denote a determiner, which may correspond to the first word 802A (i.e., "the"). Further, the processor 204 may label the second node 812B and the third node 812C with parts of speech tags of "JJ" and "NN" to respectively denote an adjective (which may correspond to the second word 802B (i.e., "compact")) and a singular noun (which may correspond to the third word 802C (i.e., "design")). At the fourth level of the constituent parse tree 804, the processor 204 may fork the second node 810B to create a fourth node 812D and a fifth node 812E, each connected to the second node 810B. The processor 204 may label the fourth node 812D with a parts of speech tag of "IN" to denote a preposition, which may correspond to the fourth word 802D (i.e., "of"). The processor 204 may label the fifth node 812E as "NP" to denote a noun phrase of the third sentence. On the other hand, at the fourth level of the constituent parse tree 804, the processor 204 may fork the fourth node 810D to create a sixth node 812F and a seventh node 812G, each connected to the fourth node 810D. The processor 204 may label the sixth node 812F and the seventh node 812G with parts of speech tags of "RB" and "JJ" to respectively denote an adverb (which may correspond to the eighth word 802H (i.e., "very")) and an adjective (which may correspond to the ninth word 8021 (i.e., "nice")). Further, at a fifth level of the constituent parse tree 804, the processor 204 may fork the fifth node 812E to create a first node 814A and a second node 814B, each connected to the fifth node 812E. The processor 204 may label first node 814A and the second node 814B with parts of speech tags of "DT" and "NN" to respectively denote a determiner (which may correspond to the fifth word 802E (i.e., "the")) and a singular noun (which may correspond to the sixth word 802F (i.e., "mouse")). The processor 204 may thereby construct the constituent parse tree 804 associated with the set of words associated with the third sentence. It may be noted that the scenario 800B shown in FIG. 8B is presented merely as example and should not be construed to limit the scope of the disclosure.

FIG. 9 is a diagram that illustrates a flowchart of an example method for addition of one or more sets of additional edges to a hierarchal graph, arranged in accordance with at least one embodiment described in the present disclosure. FIG. 9 is explained in conjunction with elements from FIG. 1, FIG. 2, FIG. 3, FIG. 4, FIG. 5, FIG. 6, FIG. 7, FIG. 8A, and FIG. 8B. With reference to FIG. 9, there is shown a flowchart 900. The method illustrated in the flowchart 900 may start at 902 and may be performed by any suitable system, apparatus, or device, such as by the example electronic device 102 of FIG. 1 or processor 204 of FIG. 2. Although illustrated with discrete blocks, the steps and operations associated with one or more of the blocks of the flowchart 900 may be divided into additional blocks, combined into fewer blocks, or eliminated, depending on the particular implementation.

At block 902, the first set of edges between the document node and one or more of the set of token nodes may be added in the hierarchal graph (e.g., the hierarchal graph 300) associated with the document (e.g., the first document 110A). In an embodiment, the processor 204 may be configured to add the first set of edges between the document node and one or more of the set of token nodes in the hierarchal graph. For example, with reference to FIG. 4, the first set of edges between the document node 302 and one or more of the set of token nodes (e.g., the first token node 310A, the second token node 310B, and the third token node 310C) may include the edge 408A, the edge 408B, and the edge 408C. The edge 408A may connect the document node 302 to the first token node 310A, the edge 408B may connect the documentnode 302 to the second token node 310B, and the edge 408C that may connect the document node 302 to the third token node 310C, as shown in FIG. 4.

At block 904, the second set of edges between the document node and one or more of the set of sentence nodes may be added in the hierarchal graph (e.g., the hierarchal graph 300) associated with the document (e.g., the first document 110A). In an embodiment, the processor 204 may be configured to add the second set of edges between the document node and one or more of the set of sentence nodes in the hierarchal graph. For example, with reference to FIG. 4, the second set of edges between the document node 302 and one or more of the set of sentence nodes (e.g., the second sentence node 306B) may include the edge 410. The edge 410 may connect the document node 302 to the second sentence node 306B.

At block 906, the third set of edges between each of the set of paragraph nodes and each associated token node from the set of token nodes may be added in the hierarchal graph (e.g., the hierarchal graph 300) associated with the document (e.g., the first document 110A). In an embodiment, the processor 204 may be configured to add the third set of edges between each of the set of paragraph nodes and each associated token node from the set of token nodes in the hierarchal graph. For example, with reference to FIG. 4, the third set of edges between the first paragraph node 304A and each associated token node of the set of token nodes (e.g., the first token node 310A, the second token node 310B, and the third token node 310C) may include the edge 412A, the edge 412B, and the edge 412C. The edge 412A may connect the first paragraph node 304A to the first token node 310A, the edge 412B may connect the first paragraph node 304A to the second token node 310B, and the edge 412C that may connect the first paragraph node 304A to the third token node 310C.

At block 908, each edge in the hierarchal graph (e.g., the hierarchal graph 300 of FIG. 3) may be labelled based on a type of the edge. In an embodiment, the processor 204 may be configured to label each edge in the hierarchal graph based on the type of the edge. For example, with reference to FIG. 4, the processor 204 may label the first edge 402 as an edge between a document node (e.g., the document node 302) and a paragraph node (e.g., the first paragraph node 304A). Further, the processor 204 may label the second edge 404 as an edge between a paragraph node (e.g., the first paragraph node 304A) and a sentence node (e.g., the second sentence node 306B). In addition, the processor 204 may label the third edge 406 may be labeled as an edge between a sentence node (e.g., the second sentence node 306B) and a parsing tree (e.g., the second parsing tree 308B). Further, the processor 204 may label each of the first set of edges (e.g., the edges 408A, 408B, and 408C) as edges between a document node (e.g., the document node 302) and a respective token node (e.g., the first token node 310A, the second token node 310B, and the third token node 310C). The processor 204 may label each of the second set of edges (e.g., the edge 410) as an edge between a document node (e.g., the document node 302) and a sentence node (e.g., the second sentence node 306B). Further, the processor 204 may label each of the third set of edges (e.g., the edges 412A, 412B, and 412C) as edges between a paragraph node (e.g., the first paragraph node 304A) and a respective token node (e.g., the first token node 310A, the second token node 310B, and the third token node 310C). Control may pass to end.

Although the flowchart 900 is illustrated as discrete operations, such as 902, 904, 906, and 908. However, in certain embodiments, such discrete operations may be further divided into additional operations, combined into fewer operations, or eliminated, depending on the particular implementation without detracting from the essence of the disclosed embodiments.

FIG. 10 is a diagram that illustrates a flowchart of an example method for an initialization of a set of features associated with a plurality of nodes of a hierarchal graph, arranged in accordance with at least one embodiment described in the present disclosure. FIG. 10 is explained in conjunction with elements from FIG. 1, FIG. 2, FIG. 3, FIG. 4, FIG. 5, FIG. 6, FIG. 7, FIG. 8A, FIG. 8B, and FIG. 9. With reference to FIG. 10, there is shown a flowchart 1000. The method illustrated in the flowchart 1000 may start at 1002 and may be performed by any suitable system, apparatus, or device, such as by the example electronic device 102 of FIG. 1 or processor 204 of FIG. 2. Although illustrated with discrete blocks, the steps and operations associated with one or more of the blocks of the flowchart 1000 may be divided into additional blocks, combined into fewer blocks, or eliminated, depending on the particular implementation.

At block 1002, a set of first features for each of the set of token nodes may be determined. In an embodiment, the processor 204 may be configured to determine the set of first features for each of the set of token nodes (in the hierarchal graph) to represent each word associated with the set of token nodes as a vector. Herein, the determination of the set of first features may correspond to an initialization of the set of first features from the set of features. The determination of the set of first features for each of the set of token nodes may correspond to a mapping of each of the set of tokens from a sparse one-hot vector associated with the corresponding word to a compact real-valued vector (for example, a 512-dimension vector). In an embodiment, the processor 204 may determine the set of first features for each of the set of tokens based on a token embedding technique including at least one of: a word2vec technique, a Fastext technique, or a Glove technique. The token embedding technique may be used to generate an embedding for each word associated with a token from the set of token nodes. The generated embedding for each word may represent the word as a fixed length vector.

In another embodiment, the processor 204 may determine the set of first features for each of the set of tokens based on a pre-trained contextual model including at least one of: an Embeddings from Language Models (ELMo) model, or a Bidirectional Encoder Representations from Transformer (BERT) model. The pre-trained contextual model may be used to generate an embedding for each word associated with a token from the set of tokens based on a context of the word in a sentence in which the word may be used. The processor 204 may generate a different word embedding for the same word when used in different contexts in a sentence. For example, a word "bank" used in a sentence in context of a financial institution may have a different word embedding than a word embedding for the same word "bank" used in a sentence in context of a terrain alongside a river (e.g., a "river bank").

In yet another embodiment, the processor 204 may use a combination of one or more token embedding techniques (such as, the word2vec technique, the Fastext technique, or the Glove technique) and one or more pre-trained contextual models (such as, the ELMo model, or the BERT model). For example, for a 200-dimension vector representative of the set of first features of a token from the set of tokens, the processor 204 may determine a value for a first 100-dimensions of the 200-dimension vector based on the one or more token embedding techniques and a second 100-dimenions of the 200-dimension vector based on the one or more pre-trained contextual models.

At block 1004, a set of second features for each of the set of sentence nodes may be determined. In an embodiment, the processor 204 may be configured to determine the set of second features for each of the set of sentence nodes in the hierarchal graph. Herein, the determination of the set of second features may correspond to an initialization of the set of second features from the set of features. In an embodiment, the determination of the set of second features for each of the set of sentence nodes may be based on an average value or an aggregate value of the determined set of first features for each corresponding token node from the set of token nodes. For example, with reference to FIG. 3, the set of first features for each of the first token node 310A, the second token node 310B, and the third token node 310C may be vectors $V_{T1}$, $V_{T2}$, and $V_{T3}$, respectively. The set of second features (e.g., a vector $V_{S2}$) for the second sentence node 306B may be determined based on an average value or an aggregate value of the set of first features for corresponding token nodes, i.e., for each of the first token node 310A, the second token node 310B, and the third token node 310C. Thus, the processor 204 may determine the vector $V_{S2}$ as $(V_{T1}+V_{T2}+V_{T3})/3$ (i.e., an average value) or as $V_{T1}+V_{T2}+V_{T3}$ (i.e., an aggregate value). An initialization of the set of second features for each of the set of sentence nodes based on the average value or the aggregate value of the set of first features of each corresponding token node from the set of token nodes may enable a faster convergence of the values of the set of second features on an application of the GNN model on the hierarchal graph. In another embodiment, the processor 204 may determine the set of second features for each of the set of sentence nodes as a random-valued vector.

At block 1006, a set of third features for each of the set of paragraph nodes may be determined. In an embodiment, the processor 204 may be configured to determine the set of third features for each of the set of paragraph nodes in the hierarchal graph. Herein, the determination of the set of third features may correspond to an initialization of the set of third features from the set of features. In an embodiment, the determination of the set of third features for each of the set of paragraph nodes may be based on an average value or an aggregate value of the determined set of second features for each corresponding sentence nodes from the set of sentence nodes. For example, with reference to FIG. 3, the set of second features for each of the first sentence node 306A and the second sentence node 306B may be vectors $V_{S1}$ and $V_{S2}$, respectively. The set of third features (e.g., a vector $V_{P1}$) for the first paragraph node 304A may be determined based on an average value or an aggregate value of the set of second features for each of the first sentence node 306A and the second sentence node 306B. Thus, the processor 204 may determine the vector $V_{P1}$ as $(V_{S1}+V_{S2})/2$ (i.e., an average value) or as $V_{S1}+V_{S2}$ (i.e., an aggregate value). An initialization of the set of third features for each of the set of paragraph nodes based on the average value or the aggregate value of the set of second features of each corresponding sentence node from the set of sentence nodes may enable a faster convergence of the values of the set of third features on an application of the GNN model on the hierarchal graph. In another embodiment, the processor 204 may determine the set of third features for each of the set of paragraph nodes as a random-valued vector.

At block 1008, a set of fourth features for the document node may be determined. In an embodiment, the processor 204 may be configured to determine the set of fourth features for the document node in the hierarchal graph. Herein, the determination of the set of fourth features may correspond to an initialization of the set of fourth features from the set of features. In an embodiment, the determination of the set of fourth features for the document node may be based on an average value or an aggregate value of the determined set of third features for each of the set of paragraph nodes. For example, with reference to FIG. 3, the set of third features for each of the first paragraph node 304A and the second paragraph node 304B may be vectors $V_{P1}$ and $V_{P2}$, respectively. The set of fourth features (e.g., a vector $V_D$) for the document node 302 may be determined based on an average value or an aggregate value of the set of third features for each of the first paragraph node 304A and the second paragraph node 304B. Thus, the processor 204 may determine the vector $V_D$ as $(V_{P1}+V_{P2})/2$ (i.e., an average value) or as $V_{P1}+V_{P2}$ (i.e., an aggregate value). An initialization of the set of fourth features for the document node based on the average value or the aggregate value of the set of third features of each paragraph node may enable a faster convergence of the values of the set of fourth features on an application of the GNN model on the hierarchal graph. In another embodiment, the processor 204 may determine the set of fourth features for the document node as a random-valued vector. In an embodiment, applying the GNN model on the constructed hierarchal graph is further based on at least one of: the determined set of second features, the determined set of third features, or the determined set of fourth features. The application of the GNN model on the constructed hierarchal graph is described further, for example, in FIG. 13. Control may pass to end.

Although the flowchart 1000 is illustrated as discrete operations, such as 1002, 1004, 1006, and 1008. However, in certain embodiments, such discrete operations may be further divided into additional operations, combined into fewer operations, or eliminated, depending on the particular implementation without detracting from the essence of the disclosed embodiments.

FIG. 11 is a diagram that illustrate a flowchart of an example method for determination of a token embedding of each of a set of token nodes in a hierarchal graph, arranged in accordance with at least one embodiment described in the present disclosure. FIG. 11 is explained in conjunction with elements from FIG. 1, FIG. 2, FIG. 3, FIG. 4, FIG. 5, FIG. 6, FIG. 7, FIG. 8A, FIG. 8B, FIG. 9, and FIG. 10. With reference to FIG. 11, there is shown a flowchart 1100. The method illustrated in the flowchart 1100 may start at 1102 and may be performed by any suitable system, apparatus, or device, such as by the example electronic device 102 of FIG. 1 or processor 204 of FIG. 2. Although illustrated with discrete blocks, the steps and operations associated with one or more of the blocks of the flowchart 1100 may be divided into additional blocks, combined into fewer blocks, or eliminated, depending on the particular implementation.

At block 1102, first positional information associated with relative positions of each of the set of tokens associated with each of a set of words in each of a set of sentences in the document (e.g., the first document 110A) may be encoded. In an embodiment, the processor 204 may be configured to encode the first positional information associated with the relative positions of each of the set of tokens associated with each of the set of words in each of the set of sentences in the document. In an embodiment, the encoded first positional information may include a positional encoding of an index of each token associated with a corresponding word in a sentence. The processor 204 may determine the positional encoding of the index of each token as a token index embedding based on equations (1) and (2) as follows:

$$PE(pos, 2i) = sin\left(\frac{pos}{10000^{\frac{2i}{d_{model}}}}\right) \quad (1)$$

$$PE(pos, 2i+1) = cos\left(\frac{pos}{10000^{\frac{2i}{d_{model}}}}\right) \quad (2)$$

Where,

PE(.): a positional encoding function;
pos: a position to be encoded;
$d_{model}$: a dimension of an embedding model (e.g., a value of $d_{model}$ may be "512" for a word embedding of a word corresponding to the token whose index is to be encoded); and
i: an index value (e.g., i $\in$ [0, 255] if $d_{model}$ = 512).

Herein, the position being encoded (i.e., "pos") in equations (1) and (2) may be an index of the token (e.g., a token "$t_{pos}$") associated with a corresponding word (e.g., a word "$w_{pos}$") in a sentence (e.g., a sentence "s"). Thus, based on the equations (1) and (2), the processor 204 may encode the first positional information by determination of the positional encoding of the index of each token associated with a corresponding word in a sentence of the document. The use of sinusoidal positional encodings may be advantageous as it may allow efficient encoding of the relative positions. An example of the encoding of the first positional information is described further, for example, in FIG. 12.

At block 1104, second positional information associated with relative positions of each of the set of sentences in each of a set of paragraphs in the document (e.g., the first document 110A) may be encoded. In an embodiment, the processor 204 may be configured to encode the second positional information associated with the relative positions of each of the set of sentences in each of the set of paragraphs in the document. In an embodiment, the encoded second positional information may include a positional encoding of an index of each sentence in a corresponding paragraph associated with the sentence. The processor 204 may determine the positional encoding of the index of each sentence as a sentence index embedding based on equations (1) and (2). Herein, the position being encoded (i.e., "pos") in equations (1) and (2) may be an index of the sentence (e.g., a sentence "$s_{pos}$") in a paragraph (e.g., a paragraph "p"). Thus, based on the equations (1) and (2), the processor 204 may encode the second positional information by determining the positional encoding of the index of each sentence in a corresponding paragraph associated with the sentence. An example of the encoding of the second positional information is described further, for example, in FIG. 12.

At block 1106, third positional information associated with relative positions of each of the set of paragraphs in the document (e.g., the first document 110A) may be encoded. In an embodiment, the processor 204 may be configured to encode the third positional information associated with the relative positions of each of the set of paragraphs in the document. In an embodiment, the encoded third positional information may include a positional encoding of an index of each paragraph in the document. The processor 204 may determine the positional encoding of the index of each paragraph as a paragraph index embedding based on equations (1) and (2). Herein, the position being encoded (i.e., "pos") in equations (1) and (2) may be an index of the paragraph (e.g., a paragraph "$p_{pos}$") in a document (e.g., a document "d"). Thus, based on the equations (1) and (2), the processor 204 may encode the third positional information by determination of the positional encoding of the index of each paragraph in the document. An example of the encoding of the third positional information is described further, for example, in FIG. 12.

At block 1108, a token embedding associated with each of the set of token nodes may be determined. In an embodiment, the processor 204 may be configured to determine the token embedding associated with each of the set of token nodes based on at least one of: the set of first features associated with each of the set of token nodes, the encoded first positional information, the encoded second positional information, and the encoded third positional information. For example, the set of first features associated with a token node from the set of token nodes may be a word embedding vector that may represent a word associated with the token node. The determination of the set of first features is described further, for example, in FIG. 10 (at 1002). The processor 204 may determine the token embedding associated with a token node from the set of token nodes based on a summation of the word embedding vector (i.e. representative of the word associated with the token node), the token index embedding, the sentence index embedding, and the paragraph index embedding. The determination of the token embedding associated with each of the set of token nodes is described further, for example, in FIG. 12. In an embodiment, the applying the GNN model on the hierarchal graph is further based on the determined token embedding associated with each of the set of token nodes. The application of the GNN model on the hierarchal graph is described further, for example, in FIG. 13. Control may pass to end.

Although the flowchart 1100 is illustrated as discrete operations, such as 1102, 1104, 1106, and 1108. However, in certain embodiments, such discrete operations may be further divided into additional operations, combined into fewer operations, or eliminated, depending on the particular implementation without detracting from the essence of the disclosed embodiments.

FIG. 12 is a diagram that illustrates an example scenario of determination of a token embedding associated with each of a set of token nodes of a hierarchal graph, arranged in accordance with at least one embodiment described in the present disclosure. FIG. 12 is explained in conjunction with elements from FIG. 1, FIG. 2, FIG. 3, FIG. 4, FIG. 5, FIG. 6, FIG. 7, FIG. 8A, FIG. 8B, FIG. 9, FIG. 10, and FIG. 11. With reference to FIG. 12, there is shown an example scenario 1200. The example scenario 1200 may include a set of word embeddings 1202, each associated with a corresponding word from a set of words in a sentence. In an example, the set of word embeddings 1202 may include a first word embedding (e.g., "$E_{[CLS]}$") associated with a special character that may indicate a start of a sentence. The set of word embeddings 1202 may include a second word embedding (e.g., "$E_{t0}$") associated with a first word of the sentence at a first position in the sentence. The set of word embeddings 1202 may include a third word embedding (e.g., "$E_{[mask]}$") associated with a second word of the sentence at a second position in the sentence. The second word may be masked for an NLP task, hence, a corresponding word embedding of the second word may be a pre-determined word embedding associated with a masked word. The set of word embeddings 1202 may further include a fourth word embedding (associated with a third word at a third position in the sentence) and a fifth word embedding (associated with a fourth word at a fourth position in the sentence), which may be similar (e.g., "$E_{t3}$"). In an embodiment, each token associated with a same word and/or words with a same context in the sentence may have a same word embedding. In the above case, the third word and the fourth word may be the same and/or both the words may have a same context in the sentence. The set of word embeddings 1202 may further include a sixth word embedding (e.g., "$E_{t4}$") associated with a fifth word at a fifth position in the sentence. Further, the set of word embeddings 1202 may include a seventh word embedding (e.g., "$E_{[SEP]}$"), which may be associated with a sentence separator (such as, a full-stop).

The example scenario 1200 may further include a set of token index embeddings 1204, each associated with a corresponding token from a set of tokens associated with a word in the sentence. The processor 204 may encode the first positional information by determination of the positional encoding of the index of each token from the set of tokens, as a token index embedding from the set of token index embeddings 1204, as described in FIG. 11 (at 1102). For example, the set of token index embeddings 1204 may include a first token index embedding (e.g., "$P_0^t$") of a first token at a zeroth index associated with the special character at the start of the sentence. The set of token index embeddings 1204 may further include token index embeddings (e.g., "$P_1^{t}$", "$P_2^{t}$", "$P_3^{t}$", "$P_4^{t}$", "$P_5^{t}$", and "$P_6^{t}$") for six more tokens at respective index locations associated with the corresponding words in the sentence.

The example scenario 1200 may further include a set of sentence index embeddings 1206, each associated with a corresponding sentence from a set of sentences in the document. The processor 204 may encode the second positional information by determination of the positional encoding of the index of each sentence from the set of sentences, as a sentence index embedding from the set of sentence index embeddings 1206, as described in FIG. 11 (at 1104). For example, the set of sentence index embeddings 1206 may include a first sentence index embedding (e.g., "$P_0^{s}$") of a first sentence at a zeroth index associated with a paragraph in which the first sentence may lie. The set of sentence index embeddings 1206 may further include sentence index embeddings (e.g., "$P_1^{s}$", "$P_2^{s}$", "$P_3^{s}$", "$P_4^{s}$", "$P_5^{s}$", and "$P_6^{s}$") for six more sentences (which may or may not be same sentences) at respective index locations associated with the corresponding sentences in the paragraph. In an embodiment, each token associated with a same sentence may have a same sentence index embedding.

The example scenario 1200 may further include a set of paragraph index embeddings 1208, each associated with a corresponding paragraph in the document. The processor 204 may encode the third positional information by determination of the positional encoding of the index of each paragraph from the set of paragraphs, as a paragraph index embedding from the set of paragraph index embeddings 1208, as described in FIG. 11 (at 1106). For example, the set of paragraph index embeddings 1208 may include a first paragraph index embedding (e.g., "$P_0^{p}$") of a first paragraph at a zeroth index in the document. The set of paragraph index embeddings 1208 may further include token index embeddings (e.g., "$P_1^{p}$", "$P_2^{p}$", "$P_3^{p}$", "$P_4^{p}$", "$P_5^{p}$", and "$P_6^{p}$") for six more paragraphs (which may or may not be same paragraphs) at respective index locations associated with the corresponding paragraphs in the document. In an embodiment, each token associated with a same paragraph may have a same paragraph index embedding.

In an embodiment, the processor 204 may be configured to determine the token embedding associated with a token node from the set of token nodes based on a summation of a corresponding one of the set of word embeddings 1202, a corresponding one of the set of token index embeddings 1204, a corresponding one of the sentence index embeddings 1206, and a corresponding one of the set of paragraph index embedding 1208. For example, as shown in FIG. 12, the token embedding associated with a token node for a token "$T_1$", associated with the first word (that may be represented by the second word embedding, "$E_{t0}$") of the sentence may be determined based on equation (3), as follows:

$$Token\ Embedding\ (T_1) =\ E_{t0} + P_1^t + P_1^s + P_1^p \quad (3)$$

In an embodiment, the processor 204 may determine a sentence embedding associated with each of the set of sentence nodes and a paragraph embedding associated with each of the set of paragraph nodes, based on the determination of the token embedding associated with each of the set of token nodes. For example, the processor 204 may determine the sentence embedding of a sentence based on a summation of: an average value or an aggregate value of word embeddings of a set of words in the sentence, an average value or an aggregate value of token index embeddings of one or more tokens associated with the sentence, the sentence index embedding of the sentence, and the paragraph index embedding associated with the sentence. In an example, the processor 204 may determine the paragraph embedding of a paragraph based on a summation of: an average value or an aggregate value of word embeddings of a set of words in each sentence in the paragraph, an average value or an aggregate value of token index embeddings of one or more tokens associated with each sentence in the paragraph, the sentence index embedding of each sentence in the paragraph, and the paragraph index embedding associated with the paragraph in the document.

In another example, the processor 204 may determine each of the set of word embeddings 1202, the set of token index embeddings 1204, the set of sentence index embeddings 1206 and the set of paragraph index embeddings 1208 as a random valued vector. In an embodiment, the processor 204 may additionally encode a node type embedding for each of the plurality of nodes in the hierarchal graph. The encoded node type embedding may be a number between "0" to "N" to indicate whether a node is a token node, a sentence node, a paragraph node, or a document node in the hierarchal graph. It may be noted that the scenario 1200 shown in FIG. 12 is presented merely as example and should not be construed to limit the scope of the disclosure.

FIG. 13 is a diagram that illustrates a flowchart of an example method for application of a Graph Neural Network (GNN) on a hierarchal graph associated with a document, arranged in accordance with at least one embodiment described in the present disclosure. FIG. 13 is explained in conjunction with elements from FIG. 1, FIG. 2, FIG. 3, FIG. 4, FIG. 5, FIG. 6, FIG. 7, FIG. 8A, FIG. 8B, FIG. 9, FIG. 10, FIG. 11, and FIG. 12. With reference to FIG. 13, there is shown a flowchart 1300. The method illustrated in the flowchart 1300 may start at 1302 and may be performed by any suitable system, apparatus, or device, such as by the example electronic device 102 of FIG. 1 or processor 204 of FIG. 2. Although illustrated with discrete blocks, the steps and operations associated with one or more of the blocks of the flowchart 1300 may be divided into additional blocks, combined into fewer blocks, or eliminated, depending on the particular implementation.

At block 1302, a scalar dot product between a first vector associated with the first node and a second vector associated with a second node from the second set of nodes may be determined. In an embodiment, the processor 204 may be configured to determine the scalar dot product between the first vector associated with the first node and the second vector associated with the second node from the second set of nodes. In an embodiment, each of the second set of nodes may be connected to the first node in the hierarchal graph (e.g., the hierarchal graph 300). For example, as shown in FIG. 3, the first node may be a token node in the third parsing tree 308C associated with the third sentence in the document (e.g., the first document 110A). In such case, the second set of nodes for the first node may include the third sentence node 306C, the second paragraph node 304B, and the document node 302. The second node may be one of such second set of nodes connected to the first node. The first node may be connected with the second node through a first edge from the set of edges. The first vector may represent a set of features associated with the first node and the second vector may represent a set of features associated with the second node. In an embodiment, in case of a token node, the first vector (or the second vector) representative of the set of features of the first node (or the second vector) may correspond to the token embedding associated with the token node. Further, in case of a sentence node, the first vector (or the second vector) representative of the set of features of the first node (or the second vector) may correspond to the sentence embedding associated with the sentence node. In case of a paragraph node, the first vector (or the second vector) representative of the set of features of the first node (or the second node) may correspond to the paragraph embedding associated with the paragraph node. In case of a document node, the first vector (or the second vector) may represent a set of features of the document node. The determination of the token embedding, sentence embedding, and paragraph embedding is described further, for example, in FIG. 11 and FIG. 12.

In an embodiment, the determined scalar dot product between the first vector associated with the first node and the second vector associated with the second node may correspond to a degree of similarity between the set of features associated with the first node and the set of features associated with the second node. In an embodiment, the first vector may be scaled based on a query weight-matrix and the second vector may be scaled based on a key weight-matrix. The determination of the scalar dot product and a use of the determined scalar dot product to determine a first weight of the first edge between the first node and the second node is described further, for example, at 1304.

At block 1304, the first weight of the first edge between the first node and the second node may be determined based on the determined scalar dot product. In an embodiment, the processor 204 may be configured to determine the first weight of the first edge between the first node and the second node based on the determined scalar dot product. In an embodiment, the processor 204 may determine the first weight based on the language attention model. The language attention model may correspond to a model to assign a contextual significance to each of a plurality of words in a sentence of the document. In an embodiment, the language attention model may correspond to a self-attention based language attention model to determine an important text (e.g., one or more important or key words, one or more important or key sentences, or one or more important or key paragraphs) in a document with natural language text. The first weight may correspond to an importance or a significance of the set of features of the second node with respect to the set of features of the first node. In an embodiment, the processor 204 may determine the first weight of the first edge between the first node and the second node by use equation (4), as follows:

$$e_{ij} = \frac{(h_i W_{L(i,j)}^{Q}).(h_j W_{L(i,j)}^{K})^T}{\sqrt{d_z}} \qquad (4)$$

Where,

eij: the first weight of the first edge between the first node (node "i"), and the second node (node "j");
$h_i$: the first vector associated with the first node (node "i");
$h_j$: a second vector associated with the second node (node "j");
$W_{L(i,j)}^{Q}$: the query weight-matrix associated with the first edge;
$W_{L(i,j)}^{K}$: the key weight-matrix associated with the first edge;
$d_z$: a dimension associated with a vector "z" representing a set of features of the node "i";
(.): the scalar dot product operation; and
$(...)^T$: a matrix transform operation.

Herein, the query weight-matrix and the key weight-matrix may scale the first vector associated with the first node and the second vector associated with the second node, respectively. The query weight-matrix may be a linear projection matrix that may be used to generate a query vector (i.e., "Q") associated with the language attention model. Further, the key weight-matrix may be a linear projection matrix that may be used to generate a key vector (i.e., "K") associated with the language attention model. Thus, the processor 204 may determine each of the set of weights based on the language attention model, by use of the equation (4), as described, for example, at 1302 and 1304.

At 1306, each of the set of weights may be normalized to obtain a set of normalized weights. In an embodiment, the processor 204 may be configured to normalize each of the set of weights to obtain the set of normalized weights. In an embodiment, the normalization of each of the set of weights may be performed to convert each of the set of weights to a normalized value between "0" and "1". Each of the set of normalized weights may be indicative of an attention coefficient (i.e., "α") associated with the language attention model. An attention coefficient (e.g., $\alpha_{ij}$) associated with the first edge between the first node (node "i") and the second node (node "j") may be indicative of an importance of the first edge. For example, the processor 204 may apply a softmax function on each of the set of weights (e.g., the first weight) to normalize each of the set of weights (e.g., the first weight), based on equation (5), as follows:

$$\alpha_{ij} = Softmax(e_{ij}) = \frac{exp(e_{ij})}{\sum_{k \epsilon N_i} exp(e_{ij})} \qquad (5)$$

Where,

$\alpha_{ij}$: attention coefficient (i.e., normalized weight) associated with the first edge between the first node (node "i") and the second node (node "j");
eij: the first weight between the first edge between the first node (node "i") and the second node (node "j");
Softmax(.): softmax function;
exp(.): exponential function; and
$N_i$: the second set of nodes connected to the first node (node "i").

At block 1308, each of a second set of vectors associated with a corresponding node from the second set of nodes may be scaled based on a value weight-matrix and a corresponding normalized weight of the set of normalized weights. In an embodiment, the processor 204 may be configured to scale each of the second set of vectors associated with the corresponding node from the second set of nodes based on the value weight-matrix and the corresponding normalized weight of the set of normalized weights. The value weight-matrix may be a linear projection matrix that may be used to generate a value vector (i.e., "V") associated with the language attention model. The scaling of the each of the second set of vectors associated with the corresponding node from the second set of nodes and a use of the scaled second set of vectors, to obtain an updated first vector associated with the first node, is described further, for example, at 1310.

At block 1310, each of the scaled second set of vectors maybe aggregated. In an embodiment, the processor 204 may be configured to aggregate each of the scaled second set of vectors associated with the corresponding node from the second set of nodes to obtain the updated first vector associated with the first node. For example, the processor 204 may aggregate each of the scaled second set of vectors by use of equation (6) to as follows:

$$z_i = \sum_{j \epsilon N_i} \alpha_{ij} h_j W_{L(i,j)}^V \qquad (6)$$

Where,

zi: the updated first vector associated with the first node (node "i");
$N_i$: the second set of nodes connected to the first node (node "i");
$\alpha_{ij}$: attention coefficient (i.e., normalized weight) associated with the first edge between the first node (node "i") and the second node (node "j");
hj: the second vector associated with the second node (node "j"); and
$W_{L(i,j)}^V$: the value weight-matrix associated with the first edge.

Thus, the processor 204 may apply the GNN model (such as the GNN model 206A shown in FIG. 2) on each of the plurality of nodes of the hierarchal graph, by use of the equations (5) and (6), as described, for example, at 1306, 1308, and 1310. In an embodiment, the GNN model may correspond to a Graph Attention Network (GAT) that may be applied on the heterogenous hierarchal graph with different types of edges and different types of nodes. The GAT may be an edge-label aware GNN model, which may use a multi-head self-attention language attention model.

At block 1312, an updated second vector associated with the first node may be determined. In an embodiment, the processor 204 may be configured to determine the updated second vector associated with the first node based on a concatenation of the updated first vector (as determined at 1310) and one or more updated third vectors associated with the first vector. The determination of the updated first vector is described, for example, at 1310. The determination of the one or more updated third vectors may be similar to the determination of the updated first vector. In an embodiment, each of the updated first vector and the one or more updated third vectors may be determined based on the application of the GNN model by use of the language attention model. In an embodiment, the processor 204 may obtain a set of updated vectors including the updated first vector and the one or more updated third vectors based on the multi-head self-attention language attention model. For example, the processor 204 may use an eight-headed language attention model, which may be associated with a set of eight query vectors, a set of eight key vectors, and a set of eight value vectors. Further, with reference to FIG. 4, the hierarchal graph (e.g., the hierarchal graph 300) may include six types of edges (e.g., the first edge 402, the second edge 404, the third edge 406, the edge 408A, the edge 410, and the edge 412A). Thus, the processor 204 may require six parameters associated with the corresponding six different types of edges for each head of the eight-headed language attention model. Thus, in current example, the processor 204 may use a set of 48 (6x8) query vectors, a set of 48 key vectors, and a set of 48 value vectors. The set of updated vectors may thereby include 48 (i.e., 8x6) updated vectors, determined based on the application of the GNN model on the first node for each type of edge connected to the first node and by use of the eight-headed language attention model.

In an embodiment, the processor 204 may determine the updated second vector associated with the first node by use of equation (7), as follows:

$$z'_i = ||_{k=1}^{m} z_i^k \qquad (7)$$

$z'_i$: the updated second vector associated with the first node (node "i");
$(\|)$: a concatenation operator for vectors; and
$z_i^k$: an updated vector from the set of updated vectors including the updated first vector and the one or more updated third vectors associated with the first node (node "i").

By use of the equation (7), the processor 204 may concatenate the updated first vector with the one or more updated third vectors associated with the first node to determine the updated second vector associated with the first node. For example, in case m=48, and each updated vector in the set of updated vectors is a 100-dimensional vector, the processor 204 may determine the updated second vector as a 4800-dimension vector based on the concatenation of each of the set of updated vectors. The processor 204 may determine the updated second vector as an updated set of features associated with the first node associated with the hierarchal graph, based on the application of the GNN model on the hierarchal graph by use of the language attention model. Similarly, the processor 204 may update the set of features associated with each of the plurality of nodes of the hierarchal graph (e.g., the hierarchal graph 300), based on the application of the GNN model on the hierarchal graph by use of the language attention model. Control may pass to end.

Although the flowchart 1300 is illustrated as discrete operations, such as 1302, 1304, 1306, 1308, 1310, and 1312. However, in certain embodiments, such discrete operations may be further divided into additional operations, combined into fewer operations, or eliminated, depending on the particular implementation without detracting from the essence of the disclosed embodiments.

FIG. 14 is a diagram that illustrates a flowchart of an example method for application of a document vector on a neural network model, arranged in accordance with at least one embodiment described in the present disclosure. FIG. 14 is explained in conjunction with elements from FIG. 1, FIG. 2, FIG. 3, FIG. 4, FIG. 5, FIG. 6, FIG. 7, FIG. 8A, FIG. 8B, FIG. 9, FIG. 10, FIG. 11, FIG. 12, and FIG. 13. With reference to FIG. 14, there is shown a flowchart 1400. The method illustrated in the flowchart 1400 may start at 1402 and may be performed by any suitable system, apparatus, or device, such as by the example electronic device 102 of FIG. 1 or processor 204 of FIG. 2. Although illustrated with discrete blocks, the steps and operations associated with one or more of the blocks of the flowchart 1400 may be divided into additional blocks, combined into fewer blocks, or eliminated, depending on the particular implementation.

At block 1402, the generated document vector may be applied to a feedforward layer of a neural network model trained for an NLP task. In an embodiment, the processor 204 may be configured to retrieve the neural network model trained for the NLP task from the memory 206, the persistent data storage 208, or the database 104. The retrieved neural network model may be a feedforward neural network model that may be pre-trained for the NLP task (e.g., a sentiment analysis task). The processor 204 may be configured to apply the generated document vector as an input feedback vector to the feedforward layer of the neural network model.

At block 1404, a prediction result associated with the NLP task may be generated. In an embodiment, the processor 204 may be configured to generate the prediction result associated with the NLP task based on the application of the generated document vector on the feedforward layer associated with the neural network model. For example, the feedforward layer may correspond to a fully connected hidden layer of the neural network model that may include a set of nodes connected to an output layer of the neural network model. Each of the set of nodes in the feedforward layer of the neural network model may correspond to a mathematical function (e.g., a sigmoid function or a rectified linear unit) with a set of parameters, tunable during training of the neural network model. The set of parameters may include, for example, a weight parameter, a regularization parameter, and the like. Each node may use the mathematical function to compute an output based on at least one of: one or more inputs from nodes in other layer(s) (e.g., previous layer(s)) of the neural network model and/or the generated document vector. All or some of the nodes of the neural network model may correspond to same or a different same mathematical function. The processor 204 may thereby compute the output at the output layer of the neural network model as the generated prediction result associated with the NLP task (i.e., a downstream application).

At block 1406, the output of the NLP task (i.e., the downstream application) for the document may be displayed based on the generated prediction result. In an embodiment, the processor 204 may be configured to display the output of the NLP task for the document, based on the generated prediction result. The display of the output of the NLP task is described further, for example, in FIGs. 15, 16A, and 16B.

At block 1408, the neural network model may be re-trained for the NLP task, based on the document vector, and the generated prediction result. In an embodiment, the processor 204 may be configured to re-train the neural network model for the NLP task based on the document vector, and the generated prediction result. In a training of the neural network model, one or more parameters of each node of the neural network model may be updated based on whether an output of the final layer (i.e., the output layer) for a given input (from a training dataset and/or the document vector) matches a correct result based on a loss function for the neural network model. The above process may be repeated for same or a different input till a minima of loss function may be achieved and a training error may be minimized. Several methods for training are known in art, for example, gradient descent, stochastic gradient descent, batch gradient descent, gradient boost, meta-heuristics, and the like. Control may pass to end.

Although the flowchart 1400 is illustrated as discrete operations, such as 1402, 1404, 1406, and 1408. However, in certain embodiments, such discrete operations may be further divided into additional operations, combined into fewer operations, or eliminated, depending on the particular implementation without detracting from the essence of the disclosed embodiments.

FIG. 15 is a diagram that illustrates an example scenario of a display of an output of an NLP task for a document, arranged in accordance with at least one embodiment described in the present disclosure. FIG. 15 is explained in conjunction with elements from FIG. 15 is explained in conjunction with elements from FIG. 1, FIG. 2, FIG. 3, FIG. 4, FIG. 5, FIG. 6, FIG. 7, FIG. 8A, FIG. 8B, FIG. 9, FIG. 10, FIG. 11, FIG. 12, FIG. 13, and FIG. 14. With reference to FIG. 15, there is shown an example scenario 1500. The example scenario 1500 may include the constructed hierarchal graph (e.g., the hierarchal graph 300) associated with a document (e.g., the first document 110A). The hierarchal graph 300 may include the document node 302 associated with the document. The hierarchal graph 300 may further include the set of paragraph nodes (e.g., the first paragraph node 304A and the second paragraph node 304B), each associated with a corresponding paragraph in the document. The hierarchal graph 300 may further include the set of sentence nodes (e.g., the first sentence node 306A, the second sentence node 306B, the third sentence node 306C, and the fourth sentence node 306D), each associated with a corresponding sentence in a paragraph in the document. Further, the hierarchal graph 300 may include the set of parsing trees (e.g., the first parsing tree 308A, the second parsing tree 308B, the third parsing tree 308C, and the fourth parsing tree 308D), each associated with a corresponding sentence. Each parse tree may include one or more token nodes. For example, the second parsing tree 308B may include the first token node 310A, the second token node 310B, and the third token node 310C. The document node 302 may be connected to each of the set of paragraph nodes. Each of the set of paragraph nodes may be connected to corresponding sentence nodes from the set of sentence nodes. Further, each of the set of sentence nodes may be connected to a corresponding parsing tree and a corresponding group of token nodes from the set of token nodes. Though not shown in FIG. 15, the hierarchal graph 300 may include other types of edges including the first set of edges, the second set of edges, and the third set of edges, as described further, for example, in FIGs. 4 and 9.

In an embodiment, the processor 204 may be configured to display an output of the NLP task for the document. In an embodiment, the displayed output may include a representation of the constructed hierarchal graph (e.g., the hierarchal graph 300) or a part of the constructed hierarchal graph, and an indication of important nodes in the represented hierarchal graph or in the part of the hierarchal graph based on the determined set of weights. In an embodiment, the processor 204 may generate an attention-based interpretation for the natural language text in the document. The processor 204 may use attention coefficients (or the set of weights) associated with each of the plurality of nodes of the hierarchal graph 300 to determine an importance of each edge in the hierarchal graph 300. Based on the determined importance of each edge in the hierarchal graph 300, the processor 204 may identify one or more important words (i.e. first words), one or more important sentences (i.e. first sentences), and one or more important paragraphs (i.e. first paragraphs) in the document. In another embodiment, the processor 204 may generate a mask-based interpretation for the natural language text in the document. The generated mask-based interpretation may correspond to an identification of a sub-graph including one or more important nodes from the GNN model and an identification of a set of key features associated with the one or more important nodes for prediction of results by the GNN model.

In an example, the NLP task may be a sentiment analysis task and the fourth sentence of the document may be an important sentence to determine a sentiment associated with the document. In such case, (as shown in FIG. 15) a weight determined for a first edge 1502 between the document node 302 and the second paragraph node 304B, a weight determined for a second edge 1504 between the second paragraph node 304B and the fourth sentence node 306D, and a weight determined for one or more third edges 1506 between the second paragraph node 304B and one or more token nodes in the fourth parsing tree 308D may be above a certain threshold weight. In the aforementioned scenario, the processor 204 may display the first edge 1502, the second edge 1504, and the one or more third edges 1506 as thick lines or lines with different colors than other edges of the hierarchal graph 300, as shown for example in FIG. 15. Further, the processor 204 may display the result (as 1508) of the sentiment analysis task (e.g., "Sentiment: Negative (73.1%)") as an annotation associated with the document node 302. In addition, the processor 204 may be configured to display the output of the NLP task for the document as an indication of at least one of: one or more important words, one or more important sentences, or one or more important paragraphs in the document. For example, the processor 204 may indicate an important paragraph (such as, the second paragraph) and an important sentence (such as, the fourth sentence) as a highlight or annotation associated with a corresponding paragraph node (i.e., the second paragraph node 304B) and a corresponding sentence node (i.e., the fourth sentence node 306D), respectively, in the hierarchal graph 300. The processor 204 may also highlight or annotate the one or more important words in a sentence, as described further, for example, in FIGs. 16A and 16B. It may be noted here that the scenario 1500 shown in FIG. 15 is merely presented as example and should not be construed to limit the scope of the disclosure.

FIGs. 16A and 16B are diagrams that illustrate example scenarios of a display of an output of an NLP task for a document, arranged in accordance with at least one embodiment described in the present disclosure. FIG. 16 is explained in conjunction with elements from FIG. 1, FIG. 2, FIG. 3, FIG. 4,FIG. 5, FIG. 6, FIG. 7, FIG. 8A, FIG. 8B, FIG. 9, FIG. 10, FIG. 11, FIG. 12, FIG. 13, FIG. 14, and FIG. 15. With reference to FIG. 16A, there is shown a first example scenario 1600A. The first example scenario 1600A may include the third parsing tree 308C associated with the third sentence (i.e., "The compact design of the mouse looks very nice.") in the document (e.g., the first document 110A). The first example scenario 1600A may further include an output 1602 of an NLP task (e.g., a sentiment analysis task) for the third sentence in the document, based on the generated document vector or the prediction result generated by the neural network model. In an embodiment, the processor 204 may display the output 1602 of the NLP task for the third sentence in the document. The output 1602 may include the third sentence and an indication (e.g., a highlight or annotation) of one or more important words determined in the third sentence. For example, as shown in FIG. 16A, the processor 204 may highlight or annotate a first word 1604 (e.g., "very") and a second word 1606 (e.g., "nice"). In an embodiment, the indication of the one or more important words may be based on a weight associated with each of the one or more important words and a type of sentiment attributed to the one or more important words. For example, the first word 1604 (e.g., "very") and the second word 1606 (e.g., "nice") may be words with a positive sentiment. Thus, for example, the processor 204 may display the highlight or annotation of each of the first word 1604 (e.g., "very") and the second word 1606 (e.g., "nice") in a shade of green color. Further, a weight associated with the second word 1606 (e.g., "nice") may be higher than a weight associated with the first word 1604 (e.g., "very"). Thus, the processor 204 may use a darker color shade to represent the highlight or annotation of the second word 1606 (e.g., "nice") than a color shade for the representation of the highlight or annotation of the first word 1604 (e.g., "very").

With reference to FIG. 16B, there is shown a second example scenario 1600B. The second example scenario 1600B may include the fourth parsing tree 308D associated with the fourth sentence (i.e., "However, when you actually use it, you will find that it is really hard to control.") in the document (e.g., the first document 110A). The first example scenario 1600B may further include an output 1608 of an NLP task (e.g., a sentiment analysis task) for the fourth sentence in the document, based on the generated document vector or the prediction result generated by the neural network model. In an embodiment, the processor 204 may display the output 1608 of the NLP task for the fourth sentence in the document. The output 1602 may include the fourth sentence and an indication (e.g., a highlight or annotation) of one or more important words determined in the fourth sentence. For example, as shown in FIG. 16B, the processor 204 may highlight or annotate a first word 1610A (e.g., "really"), a second word 1610B (e.g., "control"), a third word 1612A (e.g., "however"), and a fourth word 1612B (e.g., "hard"). The indication of the one or more important words may be based on a weight associated with each of the one or more important words and a type of sentiment attributed to the one or more important words. For example, the first word 1610A (e.g., "really"), the second word 1610B (e.g., "control"), the third word 1612A (e.g., "however"), and the fourth word 1612B (e.g., "hard") may be words with a negative sentiment. Thus, for example, the processor 204 may display the highlight or annotation of each of the first word 1610A (e.g., "really"), the second word 1610B (e.g., "control"), the third word 1612A (e.g., "however"), and the fourth word 1612B (e.g., "hard") in a shade of red color. Further, a weight associated with each of the third word 1612A (e.g., "however") and the fourth word 1612B (e.g., "hard") may be higher than a weight associated with each of the first word 1610A (e.g., "really") and the second word 1610B (e.g., "control"). Thus, the processor 204 may use a darker color shade to represent the highlight or annotation of each of the third word 1612A (e.g., "however") and the fourth word 1612B (e.g., "hard") than a color shade for the representation of the highlight or annotation of each of the first word 1610A (e.g., "really") and the second word 1610B (e.g., "control"). It may be noted here that the first example scenario 1600A and the second example scenario 1600B shown in FIG. 16A and FIG. 16B are presented merely as examples and should not be construed to limit the scope of the disclosure.

The disclosed electronic device 102 may construct a heterogenous and hierarchal graph (e.g., the hierarchal graph 300) to represent a document (e.g., the first document 110A) with natural language text. The hierarchal graph 300 may include nodes of different types such as, the document node 302, the set of paragraph nodes, the set of sentence nodes, and the set of token nodes. Further, the hierarchal graph 300 may include edges of different types such as, the six types of edges as described, for example, in FIG. 4. The hierarchal graph 300 may capture both a fine-grained local structure of each of the set of sentences in the document, as well as an overall global structure of the document. This may be advantageous in scenarios where learning long-term dependencies between words is difficult. For example, in certain scenarios the context and sentiment associated with words in a sentence may be based on other sentences in the paragraph. Further, in certain other scenarios, there may be contradictory opinions in different sentences in a paragraph, and hence, the determination of the context and sentiment of the paragraph or the document as a whole may be a non-trivial task. The disclosed electronic device 102 may provide accurate natural language processing results in such case, in contrast to the results from conventional systems. For example, the conventional system may miss an identification of one or more important words in a sentence, attribute a wrong context to a word, or determine an incorrect sentiment associated with a sentence.

The disclosed electronic device 102 may further perform the analysis of the natural language text in the document at a reasonable computational cost due to the hierarchal structure of the data structure used to represent and process the document. Further, the electronic device 102 may provide a multi-level interpretation and explanation associated with an output of the NLP task (e.g., the sentiment analysis task). For example, the electronic device 102 may provide an indication of a type of sentiment and an intensity of the sentiment associated with the document as a whole, a paragraph in the document, a sentence in the document, and one or more words in a sentence.

Various embodiments of the disclosure may provide one or more non-transitory computer-readable storage media configured to store instructions that, in response to being executed, cause a system (such as the example electronic device 102) to perform operations. The operations may include constructing a hierarchal graph associated with a document. The hierarchal graph may include a plurality of nodes including a document node, a set of paragraph nodes connected to the document node, a set of sentence nodes each connected to a corresponding one of the set of paragraph nodes, and a set of token nodes each connected to a corresponding one of the set of sentence nodes. The operations may further include determining, based on a language attention model, a set of weights associated with a set of edges between a first node and each of a second set of nodes connected to the first node in the constructed hierarchal graph. The language attention model may correspond to a model to assign a contextual significance to each of a plurality of words in a sentence of the document. The operations may further include applying a graph neural network (GNN) model on the constructed hierarchal graph based on at least one of: a set of first features associated with each of the set of token nodes, and the determined set of weights. The operations may further include updating a set of features associated with each of the plurality of nodes based on the application of the GNN model on the constructed hierarchal graph. The operations may further include generating a document vector for a natural language processing (NLP) task, based on the updated set of features associated with each of the plurality of nodes. The NLP task may correspond to a task associated with an analysis of a natural language text in the document based on a neural network model. The operations may further include displaying an output of the NLP task for the document, based on the generated document vector.

As used in the present disclosure, the terms "module" or "component" may refer to specific hardware implementations configured to perform the actions of the module or component and/or software objects or software routines that may be stored on and/or executed by general purpose hardware (e.g., computer-readable media, processing devices, etc.) of the computing system. In some embodiments, the different components, modules, engines, and services described in the present disclosure may be implemented as objects or processes that execute on the computing system (e.g., as separate threads). While some of the system and methods described in the present disclosure are generally described as being implemented in software (stored on and/or executed by general purpose hardware), specific hardware implementations or a combination of software and specific hardware implementations are also possible and contemplated. In this description, a "computing entity" may be any computing system as previously defined in the present disclosure, or any module or combination of modulates running on a computing system.

Terms used in the present disclosure and especially in the appended claims (e.g., bodies of the appended claims) are generally intended as "open" terms (e.g., the term "including" should be interpreted as "including, but not limited to," the term "having" should be interpreted as "having at least," the term "includes" should be interpreted as "includes, but is not limited to," etc.).

Additionally, if a specific number of an introduced claim recitation is intended, such an intent will be explicitly recited in the claim, and in the absence of such recitation no such intent is present. For example, as an aid to understanding, the following appended claims may contain usage of the introductory phrases "at least one" and "one or more" to introduce claim recitations. However, the use of such phrases should not be construed to imply that the introduction of a claim recitation by the indefinite articles "a" or "an" limits any particular claim containing such introduced claim recitation to embodiments containing only one such recitation, even when the same claim includes the introductory phrases "one or more" or "at least one" and indefinite articles such as "a" or "an" (e.g., "a" and/or "an" should be interpreted to mean "at least one" or "one or more"); the same holds true for the use of definite articles used to introduce claim recitations.

In addition, even if a specific number of an introduced claim recitation is explicitly recited, those skilled in the art will recognize that such recitation should be interpreted to mean at least the recited number (e.g., the bare recitation of "two recitations," without other modifiers, means at least two recitations, or two or more recitations). Furthermore, in those instances where a convention analogous to "at least one of A, B, and C, etc." or "one or more of A, B, and C, etc." is used, in general such a construction is intended to include A alone, B alone, C alone, A and B together, A and C together, B and C together, or A, B, and C together, etc.

Further, any disjunctive word or phrase presenting two or more alternative terms, whether in the description, claims, or drawings, should be understood to contemplate the possibilities of including one of the terms, either of the terms, or both terms. For example, the phrase "A or B" should be understood to include the possibilities of "A" or "B" or "A and B."

All examples and conditional language recited in the present disclosure are intended for pedagogical objects to aid the reader in understanding the present disclosure and the concepts contributed by the inventor to furthering the art, and are to be construed as being without limitation to such specifically recited examples and conditions. Although embodiments of the present disclosure have been described in detail, various changes, substitutions, and alterations could be made hereto without departing from the spirit and scope of the present disclosure.

**Claims**

1. A method, comprising:

    in a processor:

        constructing a hierarchal graph associated with a document, the hierarchal graph includes a plurality of nodes including a document node, a set of paragraph nodes connected to the document node, a set of sentence nodes each connected to a corresponding one of the set of paragraph nodes, and a set of token nodes each connected to a corresponding one of the set of sentence nodes;
        determining, based on a language attention model, a set of weights associated with a set of edges between a first node and each of a second set of nodes connected to the first node in the constructed hierarchal graph, the language attention model corresponds to a model to assign a contextual significance to each of a plurality of words in a sentence of the document;
        applying a graph neural network (GNN) model on the constructed hierarchal graph based on at least one of: a set of first features associated with each of the set of token nodes, and the determined set of weights;
        updating a set of features associated with each of the plurality of nodes based on the application of the GNN model on the constructed hierarchal graph;
        generating a document vector for a natural language processing (NLP) task, based on the updated set of features associated with each of the plurality of nodes, the NLP task corresponds to a task associated with an analysis of a natural language text in the document based on a neural network model; and
        displaying an output of the NLP task for the document, based on the generated document vector.

2. The method according to claim 1, wherein the displayed output includes an indication of at least one of: one or more first words, one or more first sentences, or one or more first paragraphs in the document, and each of the one or more first words corresponds to a key word in the document, each of the one or more first sentences corresponds to a key sentence in the document, and each of the one or more first paragraphs corresponds to a key paragraph in the document.

3. The method according to claim 1, wherein the displayed output includes a representation of the constructed hierarchal graph or a part of the constructed hierarchal graph, and an indication of important nodes in the represented hierarchal graph or in the part of the hierarchal graph based on the determined set of weights.

4. The method according to claim 1, wherein the constructing of the hierarchal graph associated with the document further comprising:

    segmenting the document to identify a set of paragraphs;
    parsing each paragraph from the set of paragraphs to identify a set of sentences;

parsing each sentence from the set of sentences to determine a parsing tree associated with a set of tokens associated with the parsed sentence; and

assembling the hierarchal graph based on the document, the identified set of paragraphs, the identified set of sentences, and the determined parsing tree for each of the identified sentences.

5. The method according to claim 4, wherein the parsing of each sentence from the set of sentences further comprising:

constructing a dependency parse tree associated with a set of words in the parsed sentence, wherein the dependency parse tree indicates a dependency relationship between each of the set of words in the parsed sentence; and

constructing a constituent parse tree associated with the set of words based on the constructed dependency parse tree, wherein the constituent parse tree is a representative of parts of speech associated with each of the set of words in the parsed sentence.

6. The method according to claim 1, wherein the constructing of the hierarchal graph associated with the document, further comprising:

adding, in the hierarchal graph, a first set of edges between the document node and one or more of the set of token nodes;

adding, in the hierarchal graph, a second set of edges between the document node and one or more of the set of sentence nodes;

adding, in the hierarchal graph, a third set of edges between each of the set of paragraph nodes and each associated token node from the set of token nodes, the set of edges comprises at least one of: the first set of edges, the second set of edges, or the third set of edges; and

labeling each edge in the hierarchal graph based on a type of the edge.

7. The method according to claim 1, further comprising determining the set of first features for each of the set of token nodes to represent each word associated with the set of token nodes as a vector.

8. The method according to claim 7, wherein the set of first features for each of set of token nodes is determined based on a token embedding technique including at least one of: a word2vec technique, a Fastext technique, or a Glove technique.

9. The method according to claim 7, wherein the set of first features for each of set of token nodes are determined based on a pre-trained contextual model including at least one of: an Embeddings from Language Models (ELMo) model, or a Bidirectional Encoder Representations from Transformer (BERT) model.

10. The method according to claim 7, further comprising:

determining a set of second features for each of the set of sentence nodes based on an average value or aggregate value of the determined set of first features for corresponding token nodes from the set of token nodes;

determining a set of third features for each of the set of paragraph nodes based on an average value or aggregate value of the determined set of second features for corresponding sentence nodes from the set of sentence nodes; and

determining a set of fourth features for the document node based on an average value or aggregate value of the determined set of third features for each of the set of the paragraph nodes, wherein the applying the GNN model on the constructed hierarchal graph is further based on at least one of: the determined set of second features, the determined set of third features, or the determined set of fourth features.

11. The method according to claim 1, further comprising:

encoding first positional information associated with relative positions of each of a set of tokens associated with each of a set of words in each of the set of sentences;

encoding second positional information associated with relative positions of each of the set of sentences in each of a set of paragraphs in the document;

encoding third positional information associated with relative positions of each of the set of paragraphs in the document; and

determining a token embedding associated with each of the set of token nodes based on at least one of: the set of first features associated with each of the set of token nodes, the encoded first positional information, the encoded second positional information, and the encoded third positional information,

wherein the applying the GNN model on the hierarchal graph is further based on the determined token embedding associated with each of the set of token nodes.

12. The method according to claim 1, further comprising:

determining a scalar dot product between a first vector associated with the first node and a second vector associated with a second node from the second set of nodes, wherein the first node is connected with the second node through a first edge from the set of edges, wherein the first vector is scaled based on a query weight-matrix and the second vector is scaled based on a key weight-matrix; and

determining a first weight of the first edge between the first node and the second node based on the determined scalar dot product.

13. The method according to claim 1, further comprising:

normalizing each of the set of weights to obtain a set of normalized weights;

scaling each of a second set of vectors associated with a corresponding node from the second set of nodes based on a value weight-matrix and a corresponding normalized weight of the set of normalized weights; and

aggregating each of the scaled second set of vectors to obtain an updated first vector associated with the first node.

14. The method according to claim 13, further comprising determining an updated second vector associated with the first node based on a concatenation of the updated first vector and one or more updated third vectors associated with the first node, wherein each of the updated first vector and the one or more updated third vectors are determined based on the application of the GNN model by use of the language attention model.

15. The method according to claim 1, wherein the generating the document vector for the NLP task further comprising at least one of: averaging or aggregating the updated set of features associated with each of the plurality of nodes of the constructed hierarchal graph, determining a multi-level clustering of the plurality of nodes, or applying a multi-level selection of a pre-determined number of top nodes from the plurality of nodes.

16. The method according to claim 1, wherein the GNN corresponds to a Graph Attention Network (GAT).

17. The method according to claim 1, further comprising:

applying the generated document vector on a feedforward layer associated with the neural network model trained for the NLP task;

generating a prediction result associated with the NLP task based on the application of the generated document vector on the feedforward layer associated with the neural network model; and

displaying the output of the NLP task for the document, based on the generated prediction result.

18. The method according to claim 17, further comprising re-training the neural network model for the NLP task based on the document vector and the generated prediction result.

19. One or more non-transitory computer-readable storage media configured to store instructions that, in response to being executed, cause a system to perform operations, the operations comprising:

constructing a hierarchal graph associated with a document, the hierarchal graph includes a plurality of nodes including a document node, a set of paragraph nodes connected to the document node, a set of sentence nodes each connected to a corresponding one of the set of paragraph nodes, and a set of token nodes each connected to a corresponding one of the set of sentence nodes;

determining, based on a language attention model, a set of weights associated with a set of edges between a first node and each of a second set of nodes connected to the first node in the constructed hierarchal graph, the language attention model corresponds to a model to assign a contextual significance to each of a plurality of words in a sentence of the document;

applying a graph neural network (GNN) model on the constructed hierarchal graph based on at least one of: a set of first features associated with each of the set of token nodes, and the determined set of weights;

updating a set of features associated with each of the plurality of nodes based on the application of the GNN model on the constructed hierarchal graph;

generating a document vector for a natural language processing (NLP) task, based on the updated set of features associated with each of the plurality of nodes, the NLP task corresponds to a task associated with an analysis of a natural language text in the document based on a neural network model; and

displaying an output of the NLP task for the document, based on the generated document vector.

20. An electronic device, comprising:

a processor configured to:

construct a hierarchal graph associated with a document, the hierarchal graph includes a plurality of nodes including a document node, a set of paragraph nodes connected to the document node, a set of sentence nodes each connected to a corresponding one of the set of paragraph nodes, and a set of token nodes each connected to a corresponding one of the set of sentence nodes;

determine, based on a language attention model, a set of weights associated with a set of edges between a first node and each of a second set of nodes connected to the first node in the constructed hierarchal graph, the language attention model corresponds to a model to assign a contextual significance to each of a plurality of words in a sentence of the document;

apply a graph neural network (GNN) model on the constructed hierarchal graph based on at least one of: a set of first features associated with each of the set of token nodes, and the determined set of weights;

update a set of features associated with each of the plurality of nodes based on the application of the GNN model on the constructed hierarchal graph;

generate a document vector for a natural language processing (NLP) task, based on the updated set of features associated with each of the plurality of nodes, the NLP task corresponds to a task associated with an analysis of a natural language text in the document based on a neural network model; and

display an output of the NLP task for the document, based on the generated document vector.

*FIG. 1*

EP 4 009 219 A1

200

Communication Network 108

System 202

Electronic Device 102

Network Interface 214

I/O Device 210

Display Screen 212

Persistent Data Storage 208

Processor 204

Memory 206

Graph Neural Network (GNN) 206A

Neural Network Model 206B

FIG. 2

*FIG. 3*

EP 4 009 219 A1

*FIG. 4*

500

**502** Construct Hierarchal Graph Associated With Document, Wherein Hierarchal Graph Includes Plurality Of Nodes Including Document Node, Set Of Paragraph Nodes, Set Of Sentence Nodes, And Set Of Token Nodes

**504** Determine, Based On Language Attention Model, Set Of Weights Associated With Set Of Edges Between First Node And Each Of Second Set Of Nodes Connected To First Node In Constructed Hierarchal Graph

**506** Apply Graph Neural Network (GNN) Model On Constructed Hierarchal Graph Based On At Least One Of: Set Of First Features Associated With Each Of Set Of Token Nodes, And Determined Set Of Weights

**508** Update Set Of Features Associated With Each Of Plurality Of Nodes Based On Application Of GNN Model On Constructed Hierarchal Graph

**510** Generate Document Vector For Natural Language Processing (NLP) Task, Based On Updated Set Of Features Associated With Each Of Plurality Of Nodes

**512** Display Output Of NLP Task For Document, Based On Generated Document Vector

*FIG. 5*

600

| 602 |
| Segment Document To Identify Set Of Paragraphs |

↓

| 604 |
| Parse Each Paragraph From Set Of Paragraphs To Identify Set Of Sentences |

↓

| 606 |
| Parse Each Sentence From Set Of Sentences To Determine Parsing Tree Associated With Set Of Tokens Associated With Parsed Sentence |

↓

| 608 |
| Assemble Hierarchal Graph Based On Document, Identified Set Of Paragraphs, Identified Set Of Sentences, And Determined Parsing Tree For Each Of Identified Sentences |

*FIG. 6*

700

| 702 |
| Construct Dependency Parse Tree Associated With Set Of Words In Parsed Sentence, Wherein Dependency Parse Tree Indicates Dependency Relationship Between Each Of Set Of Words In Parsed Sentence |

↓

| 704 |
| Construct Constituent Parse Tree Associated With Set Of Words Based On Constructed Dependency Parse Tree, Wherein Constituent Parse Tree Is Representative Of Parts Of Speech Associated With Each Of Set Of Words In Parsed Sentence |

*FIG. 7*

800A

308C

det
amod
nsubj
nmod
case
det
xcomp
advmod

DT    JJ    NN    IN  DT   NN    VBZ   RB   JJ

The  compact design of  the  mouse looks very nice

802A  802B  802C 802D 802E 802F 802G 802H 802I

*FIG. 8A*

800B

804

806

808A

S

808B

810A

NP

VP

810B

808B

810C

810D

812A

NP

PP

VBZ

ADJP

DT    JJ    NN    IN    NP   looks   RB    JJ

812B  812C  812D  812E  802G  812F  812G

The  compact design  of        very  nice

DT    NN

802A  802B  802C  802D        802H  802I

814A  814B

the   mouse

802E  802F

*FIG. 8B*

900

Add, In Hierarchal Graph, First Set Of Edges Between Document Node And One Or More Of Set Of Token Nodes — 902

Add, In Hierarchal Graph, Second Set Of Edges Between Document Node And One Or More Of Set Of Sentence Nodes — 904

Add, In Hierarchal Graph, Third Set Of Edges Between Each Of Set Of Paragraph Nodes And Each Associated Token Node From Set Of Token Nodes — 906

Label Each Edge In Hierarchal Graph Based On Type Of Edge — 908

*FIG. 9*

1000

Determine Set Of First Features For Each Of Set Of Token Nodes To Represent Each Word Associated With Set Of Token Nodes As Vector — 1002

Determine Set Of Second Features For Each Of Set Of Sentence Nodes Based On Average Value Or Aggregate Value Of Determined Set Of First Features For Corresponding Token Nodes From Set Of Token Nodes — 1004

Determine Set Of Third Features For Each Of Set Of Paragraph Nodes Based On Average Value Or Aggregate Value Of Determined Set Of Second Features For Corresponding Sentence Nodes From Set Of Sentence Nodes — 1006

Determine Set Of Fourth Features For Document Node Based On Average Value Or Aggregate Value Of Determined Set Of Third Features For Each Of Set Of Paragraph Nodes — 1008

*FIG. 10*

1100

1102
Encode first positional information associated with relative positions of each of set of tokens associated with each of set of words in each of set of sentences

1104
Encode second positional information associated with relative positions of each of set of sentences in each of set of paragraphs in document

1106
Encode third positional information associated with relative positions of each of the set of paragraphs in document

1108
Determine token embedding associated with each of set of token nodes based on at least one of set of first features associated with each of set of token nodes, encoded first positional information, encoded second positional information, and encoded third positional information

*FIG. 11*

1200

| Set of Paragraph Index Embeddings | $P_0^p$ | $P_1^p$ | $P_2^p$ | $P_3^p$ | $P_4^p$ | $P_5^p$ | $P_6^p$ | 1208 |

+

| Set of Sentence Index Embeddings | $P_0^s$ | $P_1^s$ | $P_2^s$ | $P_3^s$ | $P_4^s$ | $P_5^s$ | $P_6^s$ | 1206 |

+

| Set of Token Index Embeddings | $P_0^t$ | $P_1^t$ | $P_2^t$ | $P_3^t$ | $P_4^t$ | $P_5^t$ | $P_6^t$ | 1204 |

+

| Set of Word Embeddings | $E_{[CLS]}$ | $E_{t0}$ | $E_{[mask]}$ | $E_{t3}$ | $E_{t3}$ | $E_{t4}$ | $E_{[SEP]}$ | 1202 |

*FIG. 12*

1300

Determine Scalar Dot Product Between First Vector Associated With First Node And Second Vector Associated With Second Node From Second Set Of Nodes — 1302

Determine First Weight Of First Edge Between First Node And Second Node Based On Determined Scalar Dot Product — 1304

Normalize Each Of Set Of Weights To Obtain Set Of Normalized Weights — 1306

Scale Each Of Second Set Of Vectors Associated With Corresponding Node From Second Set Of Nodes Based On Value Weight-Matrix And Corresponding Normalized Weight Of Set Of Normalized Weights — 1308

Aggregate Each Of Scaled Second Set Of Vectors To Obtain Updated First Vector Associated With First Node — 1310

Determine Updated Second Vector Associated With First Node Based On Concatenation Of Updated First Vector And One Or More Updated Third Vectors Associated With First Node — 1312

FIG. 13

1400

Apply Generated Document Vector On Feedforward Layer Associated With Neural Network Model Trained For NLP Task    1402

Generate Prediction Result Associated With NLP Task Based On Application Of Generated Document Vector On Feedforward Layer Associated With Neural Network Model    1404

Display Output Of NLP Task For Document, Based On Generated Prediction Result    1406

Re-train Neural Network Model For NLP Task Based On Document Vector And Generated Prediction Result    1408

*FIG. 14*

FIG. 15

1600A

308C

nsubj
nmod
case
det
amod
det
xcomp
advmod

| DT | JJ | NN | IN | DT | NN | VBZ | RB | JJ |
|----|----|----|----|----|----|-----|-----|-----|
| The | compact | design | of | the | mouse | looks | very | nice |

1602  1604  1606

The compact design of the mouse looks very nice

**FIG. 16A**

1600B

308D

advmod
punct
advmod
punct
advmod
advcl
ccomp
mark
punct
nsub
nsub
cop
aux
advmod
obj
advmod
nsubj
xcomp
mark

| RB | , | WRB | PRP | RB | VBP | PRP | , | PRP | MD | VB | IN | PRP | VBZ | RB | JJ | TO | VB | . |
|----|----|----|----|----|----|----|----|----|----|----|----|----|----|----|----|----|----|----|
| However | , | when | you | actually | use | it | , | you | will | find | that | it | is | really | hard | to | control | . |

1608  1610A  1612B  1610B

1612A

However , when you actually use it , you will find that it is really hard to control .

**FIG. 16B**

**EUROPEAN SEARCH REPORT**

Europäisches Patentamt
European Patent Office
Office européen des brevets

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | MING TU ET AL: "Graph Sequential Network for Reasoning over Sequences", ARXIV.ORG, CORNELL UNIVERSITY LIBRARY, 201 OLIN LIBRARY CORNELL UNIVERSITY ITHACA, NY 14853, 4 April 2020 (2020-04-04), XP081637395, * abstract; figure 1 * * section 3 * | 1-20 | INV. G06F40/237 G06F40/216 G06F40/289 G06F40/30 G06N3/02 |
| X | BINXUAN HUANG ET AL: "Syntax-Aware Aspect Level Sentiment Classification with Graph Attention Networks", ARXIV.ORG, CORNELL UNIVERSITY LIBRARY, 201 OLIN LIBRARY CORNELL UNIVERSITY ITHACA, NY 14853, 5 September 2019 (2019-09-05), XP081474268, * abstract * * section 3 * | 1-20 | |
| X | Yao Liang ET AL: "Graph Convolutional Networks for Text Classification", , 13 November 2018 (2018-11-13), XP055775123, DOI: 10.1609/aaai.v33i01.33017370 Retrieved from the Internet: URL:https://arxiv.org/pdf/1809.05679.pdf [retrieved on 2021-02-11] * abstract * * section "Method"; figure 1 * | 1-20 | **TECHNICAL FIELDS SEARCHED (IPC)** G06F G06N |

-/--

The present search report has been drawn up for all claims

| Place of search | Date of completion of the search | Examiner |
|---|---|---|
| Berlin | 10 January 2022 | Stauch, Marc |

EPO FORM 1503 03.82 (P04C01)

Europäisches
Patentamt

European
Patent Office

Office européen
des brevets

## EUROPEAN SEARCH REPORT

**Application Number**

EP 21 19 0092

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | YUWEI FANG ET AL: "Hierarchical Graph Network for Multi-hop Question Answering", ARXIV.ORG, CORNELL UNIVERSITY LIBRARY, 201 OLIN LIBRARY CORNELL UNIVERSITY ITHACA, NY 14853, 9 November 2019 (2019-11-09), XP081529420, * abstract * * section 3 * ----- | 1-20 | |
| X | CN 111 339 754 A (UNIV KUNMING SCIENCE & TECH) 26 June 2020 (2020-06-26) * abstract * ----- | 1-20 | |

TECHNICAL FIELDS
SEARCHED      (IPC)

The present search report has been drawn up for all claims

| Place of search | Date of completion of the search | Examiner |
|---|---|---|
| Berlin | 10 January 2022 | Stauch, Marc |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
....................................................................
& : member of the same patent family, corresponding
    document

EPO FORM 1503 03.82 (P04C01)

page 2 of 2

## EP 4 009 219 A1

## ANNEX TO THE EUROPEAN SEARCH REPORT
## ON EUROPEAN PATENT APPLICATION NO.

EP 21 19 0092

This annex lists the patent family members relating to the patent documents cited in the above-mentioned European search report.
The members are as contained in the European Patent Office EDP file on
The European Patent Office is in no way liable for these particulars which are merely given for the purpose of information.

10-01-2022

| Patent document cited in search report | Publication date | Patent family member(s) | Publication date |
|---|---|---|---|
| CN 111339754 A | 26-06-2020 | NONE | |

For more details about this annex : see Official Journal of the European Patent Office, No. 12/82